(19) Europäisches Patentamt
European Patent Office
Office européen des brevets

(11) **EP 3 442 144 A1**

(12) **EUROPEAN PATENT APPLICATION**
published in accordance with Art. 153(4) EPC

(43) Date of publication:
**13.02.2019 Bulletin 2019/07**

(21) Application number: **17779175.3**

(22) Date of filing: **05.04.2017**

(51) Int Cl.:
**H04J 99/00** *(2009.01)*   **H04W 72/04** *(2009.01)*

(86) International application number:
**PCT/JP2017/014230**

(87) International publication number:
**WO 2017/175797 (12.10.2017 Gazette 2017/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.04.2016 JP 2016078501**

(71) Applicant: **NTT DOCOMO, INC.**
**Chiyoda-ku**
**Tokyo 100-6150 (JP)**

(72) Inventors:
• **SANO, Yousuke**
  **Tokyo 100-6150 (JP)**
• **TAKEDA, Kazuaki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER DEVICE AND BASE STATION**

(57)   A user equipment used in a radio communication system, including: a receiving unit that receives, from a base station, a part of pieces of control information used for acquiring a desired signal from a multiplexed signal obtained by multiplexing signals of a plurality of users in a power region; and a desired signal acquiring unit that acquires the desired signal from the multiplexed signal using the control information, wherein when the receiving unit receives the part of pieces of control information from the base station, the desired signal acquiring unit uses information the same as information of the desired signal as information of interference signal which is not received from the base station among the control information.

FIG.8

RECEIVED SIGNAL (FREQUENCY REGION)
CHANNEL ESTIMATION — S201
PDCCH DEMODULATION — S202
IS IT NOMA MULTIPLEXED? — S203
NO / YES

• PRESENCE OR ABSENCE OF INTERFERENCE OF EACH Layer
• MODULATION SCHEME OF INTERFERENCE SIGNAL
• PRESENCE OR ABSENCE OF INTERFERENCE OF EACH Layer
• TM OF INTERFERENCE

S204 — CHANNEL EQUALIZATION/ SPATIAL SEPARATION (SINGLE USER)
S206 — CHANNEL EQUALIZATION/ SPATIAL SEPARATION (MULTIPLE USERS)
LIKELIHOOD CALCULATION (NORMAL SIGNAL POINTS) — S205

S207 — IS SIMULTANEOUS MODULATION PERFORMED?
• PRESENCE OR ABSENCE OF SIMULTANEOUS MODULATION
YES / NO

S209 — LIKELIHOOD CALCULATION (SIMULTANEOUS SIGNAL POINTS OF NON-Gray mapping)
S208 — LIKELIHOOD CALCULATION (SIMULTANEOUS SIGNAL POINTS OF Gray mapping)
S210 — TURBO DECODING PROCESS
• MULTIPLEXING POWER RATIO
• TOTAL TRANSMISSION POWER
S211 — ERROR DETECTION (CRC)
RECEIVED DATA SEQUENCE

EP 3 442 144 A1

**Description**

TECHNICAL FIELD

The present invention relates to a radio communication system to which a scheme of multiplexing and transmitting a plurality of users in a power region on the same frequency resources is applied.

BACKGROUND ART

In 3GPP, multi-user superposition transmission (MUST) is under review (Non-Patent Document 1). Non-orthogonal multiple access (NOMA) is under review as one of techniques included in MUST. NOMA is a multiple access technique in which signals to a plurality of user equipment UEs (hereinafter, "UEs") in a cell are multiplexed on the same frequency resources and transmitted simultaneously on a base station eNB (hereinafter, "eNB") side. As a result, a further improvement in frequency use efficiency is expected.

The application of a symbol level interference canceller as a technique for reducing inter-user interference in UEs that execute NOMA is under review (Non-Patent Document 1). As the symbol level interference canceller, there is, for example, a reduced complexity maximum likelihood (R-ML) detection detector.

Further, as a NOMA transmission method, a method of simultaneously modulating transmission bits of UEs so that signal points after NOMA multiplexing have gray mapping is under review (MUST category 2 described in Non-Patent Document 1). A signal detection accuracy in the UEs can be improved through the gray mapping.

CITATION LIST

NON-PATENT DOCUMENT

Non-Patent Document 1: 3GPP TR 36.859 V 13.0.0 (2015-12)
Non-Patent Document 2: 3GPP TS 36.213 V 13.1.1 (2016-03)

SUMMARY OF THE INVENTION

PROBLEM TO BE SOLVED BY THE INVENTION

In order for the UE to appropriately detect a NOMA multiplexed desired signal using the interference canceller, it is necessary for the UE to detect information such as the presence or absence of the application of simultaneous modulation, a modulation scheme of an interfering user (the other user of a NOMA multiplexed pair), the number of transmission rank of an interfering user, a multiplexing power ratio, and total transmission power. However, there was no technique of enabling the UE to appropriately acquire such control information in the past.

The present invention was made in light of the foregoing, and it is an object of the present invention to provide a technique of enabling the user equipment to appropriately acquire control information used for obtaining a desired signal from a received signal in a radio communication system in which signals of a plurality of user are multiplexed in a power region and transmitted.

MEANS FOR SOLVING PROBLEM

According to an embodiment of the present invention, provided is a user equipment used in a radio communication system, including:

a receiving unit that receives, from a base station, a part of pieces of control information used for acquiring a desired signal from a multiplexed signal obtained by multiplexing signals of a plurality of users in a power region; and
a desired signal acquiring unit that acquires the desired signal from the multiplexed signal using the control information,
wherein when the receiving unit receives the part of pieces of control information from the base station, the desired signal acquiring unit uses information the same as information of the desired signal as information of interference signal which is not received from the base station among the control information.

EP 3 442 144 A1

EFFECT OF THE INVENTION

According to an embodiment of the present invention, it is possible to enable the user equipment to appropriately acquire control information used for obtaining a desired signal from a received signal in a radio communication system in which a plurality of user signals are multiplexed in a power region and transmitted.

BRIEF DESCRIPTION OF DRAWINGS

Fig. 1 is a diagram for describing a basic principle of NOMA;
Fig. 2A is a diagram for describing a basic principle of NOMA;
Fig. 2B is a diagram for describing a basic principle of NOMA;
Fig. 2C is a diagram for describing a basic principle of NOMA;
Fig. 3A is a diagram illustrating an example of signal points in NOMA;
Fig. 3B is a diagram illustrating an example of signal points in NOMA;
Fig. 4 is a diagram illustrating $P_A$ and $P_B$;
Fig. 5 is a diagram for describing total transmission power in an eNB;
Fig. 6 is a configuration diagram of a radio communication system according to an embodiment of the present invention;
Fig. 7 is a diagram for describing a basic operation according to the present embodiment;
Fig. 8 is a flowchart for describing an exemplary reception operation of a UE;
Fig. 9 is a diagram for describing a parameter notification method according to a first example;
Fig. 10 is a diagram for describing a parameter notification method according to a second example;
Fig. 11 is a diagram for describing a parameter notification method according to a third example;
Fig. 12 is a diagram illustrating an example of a power ratio in which signal points after simultaneous modulation are arranged at equal intervals according to the third example;
Fig. 13 is a diagram for describing a parameter notification method according to a fourth example;
Fig. 14 is a diagram for describing a parameter notification method according to a fifth example;
Fig. 15 is a diagram for describing a parameter notification method according to a sixth example;
Fig. 16 is a diagram illustrating an example of a table according to a sixth example;
Fig. 17 is a block diagram illustrating functional configurations of an eNB and a UE;
Fig. 18 is a HW configuration diagram of an eNB;
Fig. 19 is a HW configuration diagram of a UE; and
Fig. 20 is a block diagram illustrating functional configurations of an eNB and a UE.

MODE(S) FOR CARRYING OUT THE INVENTION

Hereinafter, exemplary embodiments of the present invention will be described with reference to the appended drawings. Embodiments to be described below are merely examples, and an embodiment to which the present invention is applied is not limited to the following embodiments. For example, a mobile communication system according to the present embodiment is assumed to be a system of a scheme conforming to LTE, but the present invention is not limited to LTE but is applicable to other schemes. Further, in this specification and claims set forth below, "LTE" is used in a broad sense including communication schemes (including 5G) corresponding to Releases8 to 14, or later of 3GPP.

In the following description, NOMA is used as an example of a scheme of multiplexing and transmitting a plurality of users on the same frequency resources in a power region, but the present invention is applicable without being limited to NOMA. In the present embodiment, signals that are to undergo NOMA multiplexing are assumed to be data signals (signals of a physical downlink shared channel (PDSCH) in LTE in the present embodiment), but the present invention is not limited to the data signal and applicable to other signals.

(NOMA)

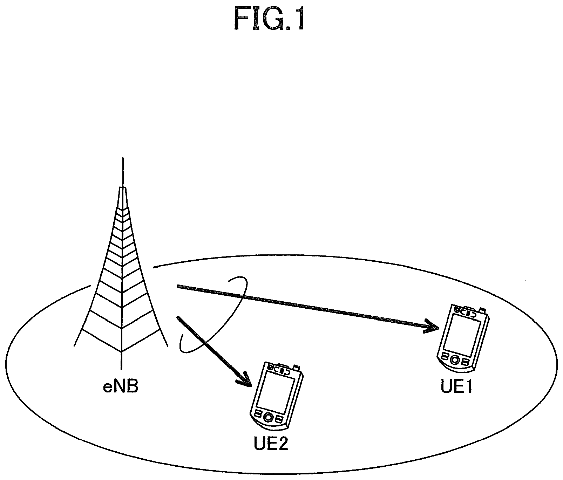

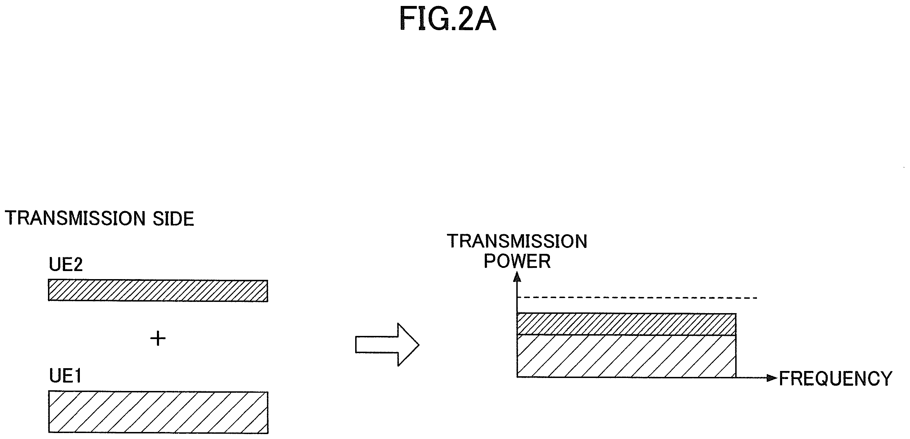

As described above, since NOMA is used in the present embodiment, a basic principle of downlink of NOMA will be described with reference to Figs. 1 and 2A-2C. A UE 2 (a near UE or a center UE) close to an eNB and a UE 1 (a far UE or an edge UE) near a cell edge are illustrated in Fig. 1.

The eNB selects the UE 1 and the UE 2 as a pair, multiplexes a signal of the UE 1 and a signal of the UE 2 using the same frequency resources, and simultaneously transmits the multiplexed signal as illustrated in Fig. 2A. At this time, high power is allocated to the UE 1 at the cell edge, and low power is allocated to the UE 2 near the cell center.

The multiplexing of the signals of the two UEs as a pair is an example, and signals of three or more UEs may be multiplexed.

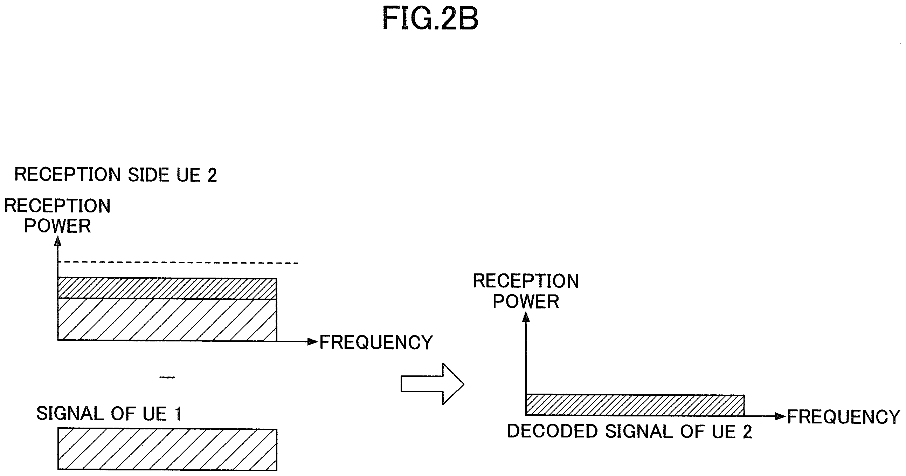

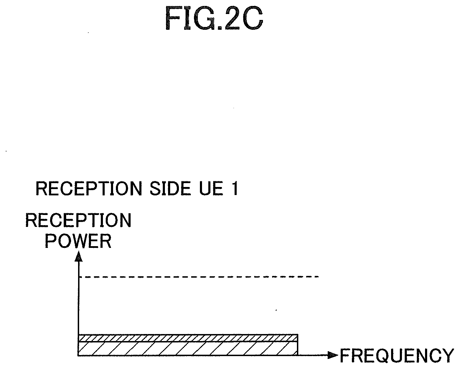

A signal destined for the UE 2 and a signal destined for the UE 1 arrive at the UE 2 near the cell center in a multiplexed form, but as illustrated in Fig. 2B, the signal of the UE 2 can be decoded by removing the signal of the UE 1 through an interference cancellation process. On the other hand, for the UE 1 at the cell edge, since low power is allocated to the signal of the UE 2 serving as interference to the UE 1, the signal of the UE 2 becomes very weak as illustrated in Fig. 2C. Therefore, the UE 1 can directly decode the signal destined for the UE 1 without performing the interference cancellation process. As described above, in NOMA, the multiplexing in the power region is performed, but the technique of performing the multiplexing in the power region is not limited to NOMA.

Further, MIMO introduced into an LTE system can be combined with NOMA, and in this case, it is possible to further improve system performance. In downlink MIMO specified in LTE, in order to improve a reception SINR, precoding (an adjustment of a phase and an amplitude) is used, and a precoded signal is applied to each antenna.

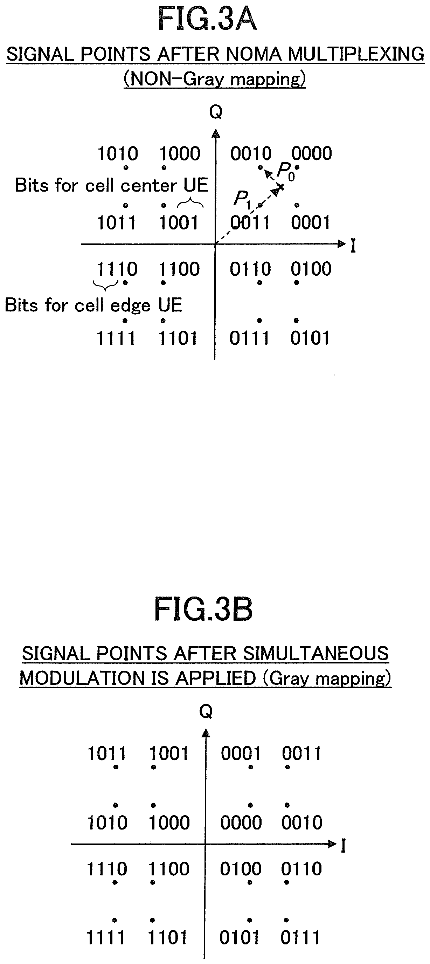

As described above, it is under review to perform simultaneous modulation of transmission bits of the UEs so that signal points after the NOMA multiplexing have the gray mapping. Figs. 3A and 3B are diagrams illustrating signal points after NOMA multiplexing when a modulation scheme of each user is QPSK. Fig. 3A illustrates an example in which simultaneous modulation is not applied and Fig. 3B illustrates an example in which simultaneous modulation is applied so that a gray mapping is obtained. The simultaneous modulation according to the present embodiment indicates performing modulation by collectively mapping information bits of a plurality of users (four bits in the case of two users and QPSK) to signal points so that the gray mapping is obtained.

(Signal model example of NOMA)

An example of a signal model of NOMA will be described below. First, symbols in respective Formulas have the following meanings.
Y: received signal
H: channel matrix
wi: precoder matrix for stream i
gi: H x wi (equivalent channel)
P: power factor for NOMA (power ratio)
S: Trans. Symbol for cell center UE (transmission signal of center UE)
i: Trans. Symbol for cell edge UE (transmission signal of cell edge UE)
n: noise vector (noise)
The following Formula indicates a received signal when the number of rank is 1 for both the center UE and the edge UE.

[Math. 1]

$$y = \mathbf{H}\mathbf{w}_1\sqrt{p}s + \mathbf{H}\mathbf{w}_1\sqrt{1-p}i + \mathbf{n}$$
$$= \mathbf{g}\left(\sqrt{p}s + \sqrt{1-p}i\right) + \mathbf{n}$$

The following Formula illustrates a received signal when the number of rank of the center UE is 2 and the number of rank of the edge UE is 1.

[Math. 2]

$$y = H \begin{bmatrix} w_1 & w_2 \end{bmatrix} \sqrt{p} \begin{bmatrix} s_1 \\ s_2 \end{bmatrix} + H \sqrt{2} w_1 \sqrt{1-p} \, i + n$$

$$= \begin{bmatrix} g_1 & g_2 \end{bmatrix} \begin{bmatrix} \sqrt{p} \, s_1 + \sqrt{2(1-p)} \, i \\ \sqrt{p} \, s_2 \end{bmatrix} + n$$

The following formula illustrates a received signal when the number of rank is 2 for both the center UE and the edge UE.

[Math. 3]

$$y = H \begin{bmatrix} w_1 & w_2 \end{bmatrix} \sqrt{p} \begin{bmatrix} s_1 \\ s_2 \end{bmatrix} + H \begin{bmatrix} w_1 & w_2 \end{bmatrix} \sqrt{1-p} \begin{bmatrix} i_1 \\ i_2 \end{bmatrix} + n$$

$$= \begin{bmatrix} g_1 & g_2 \end{bmatrix} \begin{bmatrix} \sqrt{p} \, s_1 + \sqrt{1-p} \, i_1 \\ \sqrt{p} \, s_2 + \sqrt{1-p} \, i_2 \end{bmatrix} + n$$

(Transmission power of eNB in NOMA)

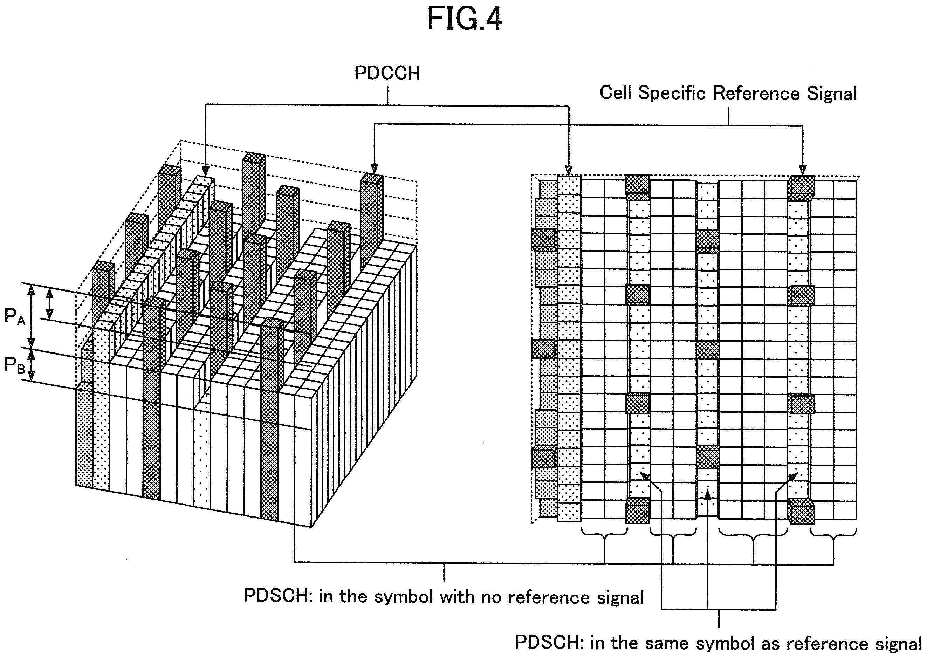

As described above, a channel in which NOMA multiplexing is performed in the present embodiment is a PDSCH in which data signal is carried. Here, the transmission power of the PDSCH is controlled according to the parameters $P_A$ and $P_B$ (Non-Patent Document 2). As illustrated in Fig. 4, $P_A$ is a power difference (a power offset) between the reference signal and the PDSCH in the symbol with no reference signal. $P_B$ is a power difference (a power offset) between the PDSCH in the symbol with the reference signal and the PDSCH in the symbol with no reference signal. The UE can detect the transmission power of the PDSCH if $P_A$ and $P_B$ are detected. Here, $P_B$ is specific to a cell and broadcast through an SIB2. On the other hand, $P_A$ is specific to a UE and individually reported to a UE through higher layer signaling. In other words, generally, $P_A$ can be recognized as power information corresponding to transmission power of a desired signal.

As described above, since $P_A$ is specific to a UE, UEs that undergo NOMA multiplexing are assumed to differ in a $P_A$ value in an operation form in which a plurality of $P_A$s are applied in the same cell.

Here, as control information necessary for the UE to appropriately detect a signal of the PDSCH after NOMA multiplexing, there is the following information.

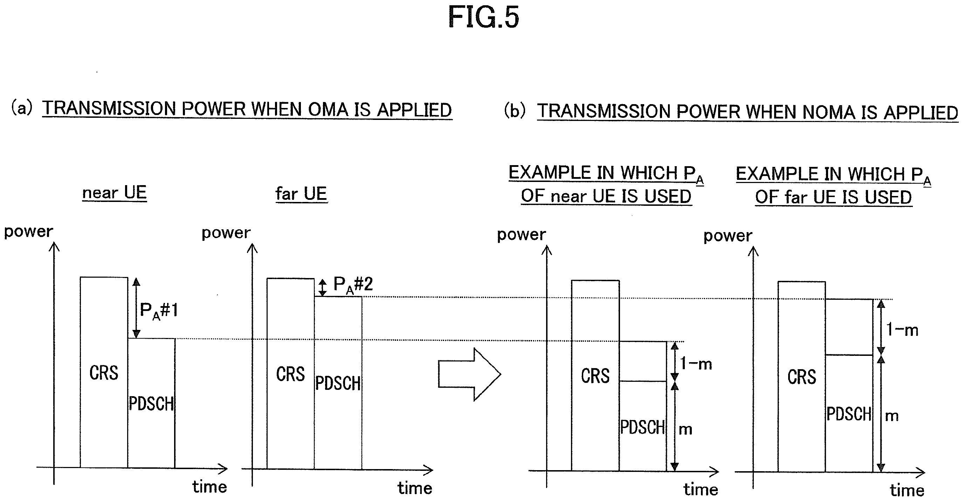

- The presence or absence of the application of simultaneous modulation
- Modulation scheme of the interfering user
- Interference presence/absence information of each layer (or the number of transmission rank of the interfering user)
- Transmission mode (TM)
- NOMA multiplexing power factor (m in Fig. 5(b))
- Total transmission power after NOMA multiplexing (a $P_A$ value in Fig. 5(a))

For the total transmission power, when UEs having different $P_A$s are NOMA multiplexed, a method of selecting the total transmission power in the eNB is not unique. The problem in this case will be described with reference to Figs. 5(a) and 5(b).

Fig. 5(a) illustrates a difference in the transmission power of the PDSCH due to a difference in assumed $P_A$ between the near UE and the far UE when orthogonal multiple access (OMA) is applied. Fig. 5(b) illustrates the transmission power of the PDSCH when NOMA is applied to the near UE and the far UE.

A diagram on the left side of Fig. 5(b) illustrates an example in which $P_A$ of the near UE is used, and a diagram on the right side of Fig. 5(b) illustrates an example in which $P_A$ of the far UE is used. In the case where $P_A$ of the near UE is used, when $P_A\#1$ for the far UE is not signaled, the signal detection accuracy of the far UE is likely to degrade particularly in the case of high-order modulation (such as 16QAM). On the other hand, when $P_A\#2$ for the near UE is not signaled, the signal detection accuracy of the near UE is likely to degrade in the case of high-order modulation (16QAM or the like).

In the present embodiment, in consideration of the above-described problem, a technique of enabling the UE to appropriately acquire control information used when the UE appropriately detects the PDSCH signal after NOMA multiplexing is provided. Since the control information is information used for removing interference when another UE that is NOMA-multiplexed is regarded as an interference source (interfering UE) of a corresponding UE, this information can also be called interference information. The technique will be described in detail.

(System configuration and basic operation)

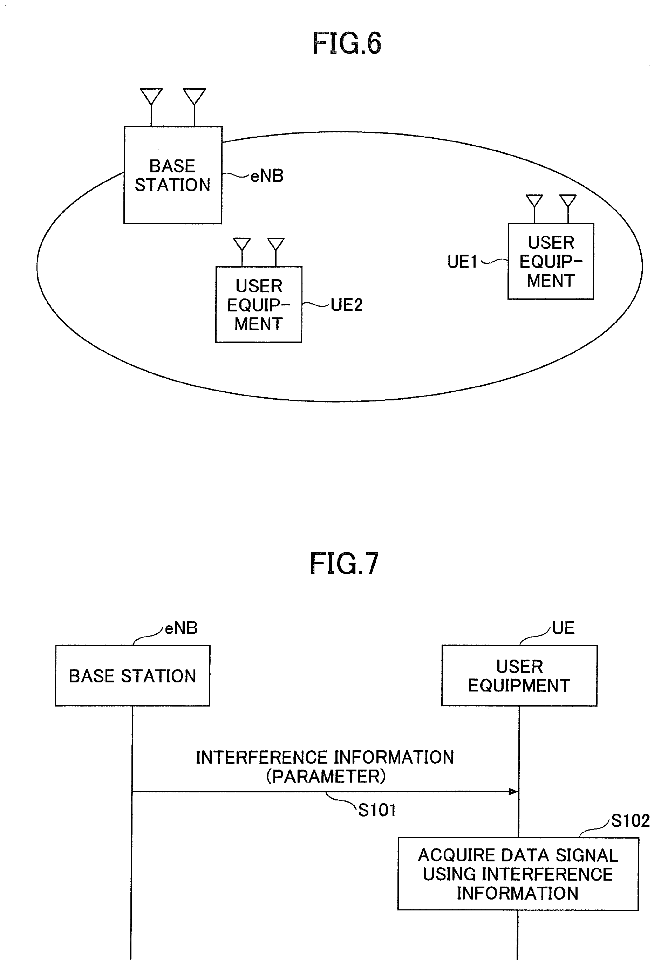

Fig. 6 is a configuration diagram of the radio communication system according to the embodiment of the present invention. As illustrated in Fig. 6, the radio communication system of the present embodiment includes a base station eNB (hereinafter, "eNB"), a user equipment UE 2 close to the eNB (hereinafter, "UE 2"), and a user equipment UE 1 at a cell edge (hereinafter, "UE 1"). Each of the eNB and each UE has at least functions of LTE and a function of performing NOMA to which MIMO is applied.

As described above, NOMA is a multiple access technique in which signals destined for a plurality of UEs in a cell are multiplexed on the same resource and simultaneously transmitted on the eNB side, and the signals of the users are multiplexed in the power region. The signals of the users multiplexed in the power region are separated by a power distribution between paired users and application of the interference cancellation function in the UE. The technique of performing multiplexing in the power region is not limited to NOMA.

There are a plurality of UEs in the cell of the eNB, but Fig. 6 illustrates two UEs (the UE 1 and the UE 2) of a pair selected as a multiplexing target in the power region among a plurality of UEs in the eNB. In other words, it is illustrated that the eNB receives CQIs from the UEs, and the UE 1 and the UE 2 are selected as a result of pair selection based on the received CQIs of the UEs. A power factor is also decided when a pair is selected.

In the radio communication system according to the present embodiment, an operation illustrated in Fig. 7 is basically performed. In other words, the eNB gives notification of interference information to the UE (step S101). Using the interference information, the UE acquires a desired data signal (the signal of the PDSCH) from the NOMA multiplexed received signals (step S102).

As described above, the interference information according to the present embodiment includes the following information.

- The presence or absence of the application of simultaneous modulation
- Modulation scheme of the interfering user
- The number of transmission rank of the interfering user (or interference presence/absence information of each layer)
- Transmission mode (TM)
- NOMA multiplexing power factor
- Total transmission power after NOMA multiplexing

However, it is not essential for eNB to notify the UE of all the above information as the interference information. For information of which the eNB does not notify the UE, the UE may use a predetermined fixed value or may use its own information under the assumption that it is the same as the information of itself (the UE). Further, estimation may be performed when it is possible to estimate through blind detection.

As a notification method for information of which the eNB notifies the UE, either or both of semi-static signaling by an RRC message and dynamic signaling by DCI may be used. Further, the eNB may notify the UE of an interference information candidate through radio resource control (RRC) in advance, and the UE may specify the information through blind detection. Furthermore, the eNB may notify the UE of the interference information candidate through the RRC in advance, and the UE may specify the information through dynamic signaling.

In short, in the present embodiment, there are variations such as the following notification method (acquisition method for the UE) for each piece of interference information described above:

- A predefined fixed value is used
- It is assumed to be the same as its own information (interference is assumed to be the same as information of a desired signal)
- Semi-static signaling by RRC
- Dynamic signaling by DCI
- Blind detection
- Notification of candidates is given through RRC in advance, and it is specified through blind detection
- Notification of candidates is given through RRC in advance, and it is specified through by dynamic signaling

In the present embodiment, the notification of the interference information is given using any one or more of above-mentioned notification methods. Specific examples of the notification method will be described later.

(Data signal acquisition operation of UE using interference information)

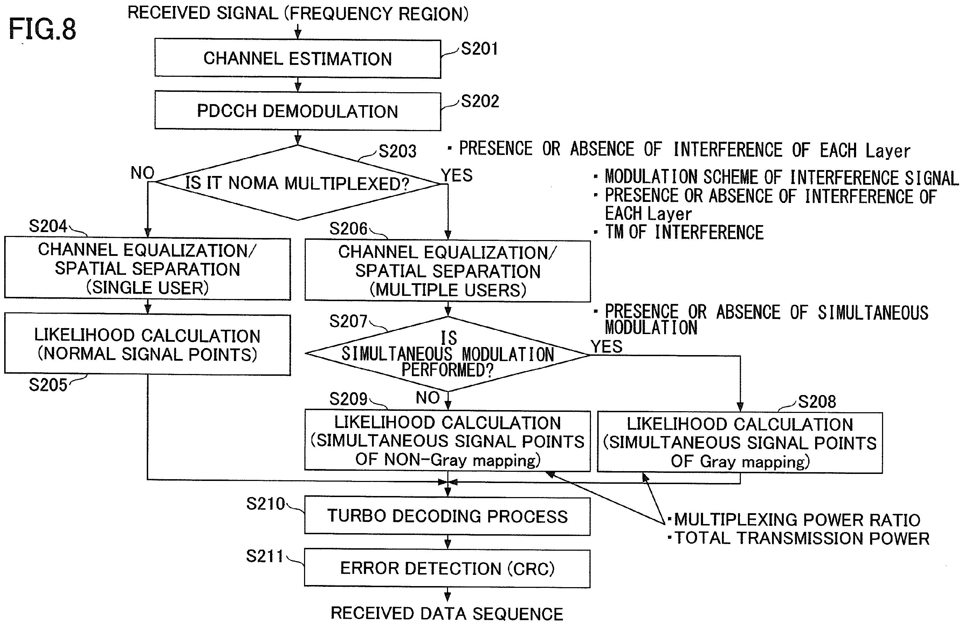

An exemplary operation in which the UE acquires a desired (its own) data signal from a NOMA multiplexed signal using the interference information will be described with reference to the flowchart of Fig. 8. This example is an exemplary operation in which the UE applies reduced complexity maximum likelihood (R-ML) detection detector. In the following example, the UE may already acquire and retain the interference information or may acquire the interference information by the PDCCH (DCI) in step S202.

The UE performs the channel estimation based on the received signal from the eNB (step S201), and demodulates the PDCCH (step S202). In step S203, it is determined whether or not the data signal (PDSCH) is NOMA multiplexed based on the interference presence/absence information of each layer (including the case in which the number of layer is one), and when a determination result is No (there is no interference in any layer, that is, it is not NOMA multiplexed), the process proceeds to step S204, and when a determination result is Yes (there is interference in any layer, that is, it is NOMA multiplexed), the process proceeds to step S206.

When it is determined to be NOMA multiplexed (in the case of a single user) in step S204, the UE performs channel equalization/spatial separation of the PDSCH, calculates the likelihood for normal signal points, and estimates the received signal (step S205).

When it is determined to be NOMA multiplexed (in the case of multiple users) in step S206, the UE performs channel equalization/spatial separation of the PDSCH by using the modulation scheme of the interference signal, the presence/absence of interference of each layer, and the TM of the interference signal.

In step S207, the UE determines whether or not the simultaneous modulation is performed based on simultaneous modulation presence or absence information, and when a determination is YES (the simultaneous modulation is performed), the UE proceeds to step S208, but when a determination result is No (the simultaneous modulation is not performed), the process proceeds to step S209.

In step S208, the UE performs the likelihood calculation on simultaneous signal points of the gray mapping using the multiplexing power factor and the total transmission power, and estimates the received signal. In step S209, the UE performs the likelihood calculation on simultaneous signal points of non-gray mapping using the multiplexing power factor and the total transmission power, and estimates the received signal.

Next, a turbo decoding process is performed (step S210), error detection (CRC) is performed (step S211), and a desired received data sequence is acquired.

First to sixth examples of the interference information notification method will be described below.

(First example)

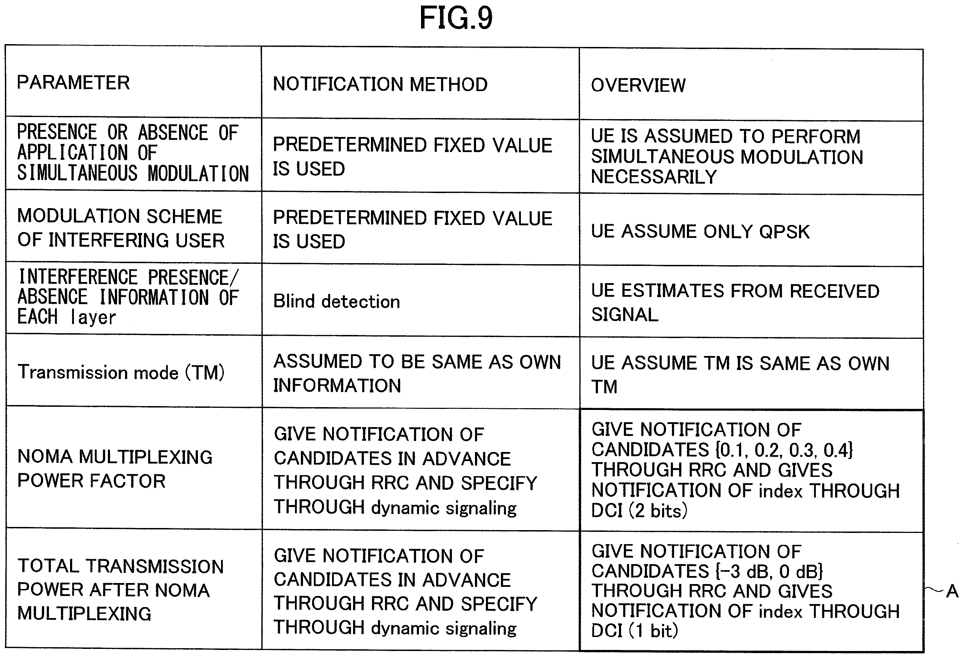

First, the first example will be described. Fig. 9 illustrates a summary of parameter notification methods according to the first example and operation examples of the UE side corresponding to the notification methods.

In the first example, the UE uses a predetermined fixed value for information about whether or not the simultaneous modulation is applied. For example, the UE always assumes that the simultaneous modulation is necessarily performed in NOMA multiplexing. Further, a predetermined fixed value is also used for the modulation scheme of the interfering user. For example, the UE assumes only QPSK as the modulation scheme of the interfering user.

The UE estimates the interference presence/absence information of each layer from the received signal through the blind detection. The interference presence/absence information of each layer is information indicating, for example, whether there is interference for the layer 1 or there is interference for the layer 2 when there are the layer 1 and the layer 2 as a PDSCH reception layer (stream) of the UE. "There is interference" means that data signals of other UEs are NOMA multiplexed. As a method of estimating the presence or absence of interference, for example, in the case of QPSK, it is estimated that there is interference when signal points of the received signal are close to the signal points illustrated in Figs. 3A and 3B, and it is estimated that there is no interference when signal points of the received signal are not close to the signal points illustrated in Figs. 3A and 3B.

The transmission mode (TM) of the interfering user is assumed to be the same as its own information. For example, when the TM of its own received signal is TM4, the UE estimates that the TM of the interfering user is also TM4.

For the NOMA multiplexing power factor, a notification of candidates is given from the eNB to the UE in advance through the RRC, and the UE specifies the multiplexing power factor through the dynamic signaling. As an example, the eNB gives the notification of multiplexing power factor candidates {0.1, 0.2, 0.3, 0.4} through the RRC signaling, and a notification of an index indicating a specific one of the candidates is given through the DCI using 2 bits. Here, the multiplexing power factor may be a multiplexing power factor for its own UE or may be a multiplexing power factor of another UE to be multiplexed. The multiplexing power factor may be set in advance.

For the total transmission power after NOMA multiplexing, a notification of candidates is given from the eNB to the UE in advance through the RRC, and the UE specifies the total transmission power through the dynamic signaling. For example, the eNB notifies the UE of {-3 dB, 0 dB} as a candidate through the RRC, and notifies of an index indicating a specific one of the candidates through the DCI using 1 bit. {-3 dB, 0 dB} is an example of notifying of $P_A$ which the eNB is using within the cell as a candidate. A value reported as the information of the total transmission power may be $P_A$ as described above or the transmission power of the PDSCH. Regarding matters indicated by A in Fig. 9, in the first example, the UE performs, for example, the following operations.

In other words, when the notification of the candidate is not given through the RRC signaling, the UE decodes the PDCCH on the assumption that the present bits (2 + 1 = 3 bits) are not included in the DCI. When the notification of the candidate is given through the RRC signaling, the UE decodes the PDCCH on the assumption that the present bits (2 + 1 = 3 bits) are added to the DCI. For example, when the DCI to which the above bits are not added is assumed to be X bits, the DCI to which 3 bits are added is (X + 3) bits, and the UE performs the decoding process under the assumption that the DCI is (X + 3) bits.

(Second example)

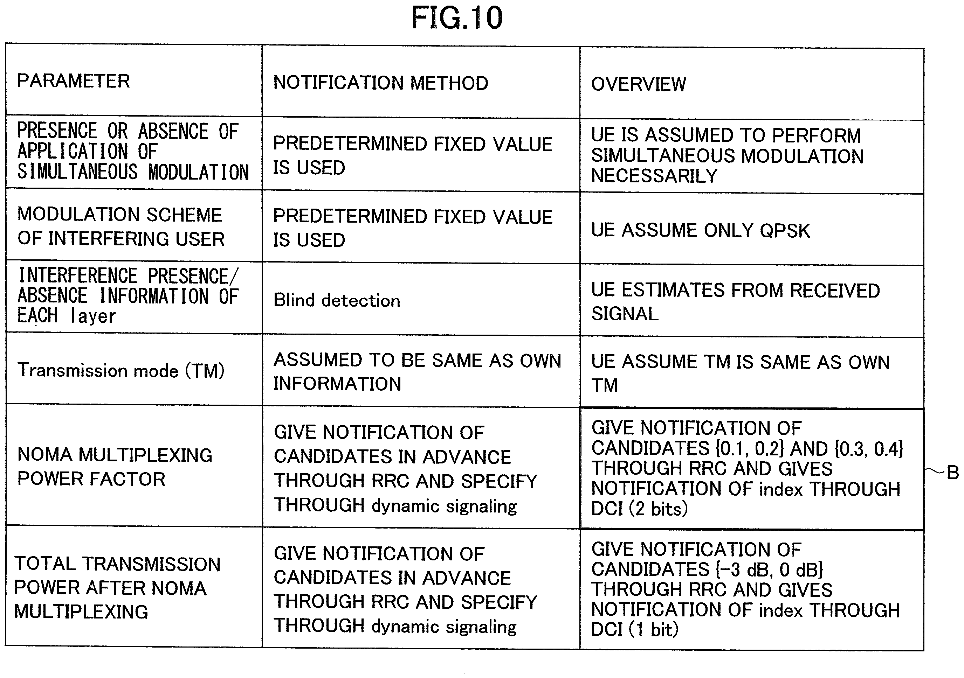

Next, the second example will be explained. Fig. 10 illustrates a summary of parameter notification methods according to the second example and operation examples of the UE side corresponding to the notification methods. The second example differs from the first example in an example of a method of notifying of the NOMA multiplexing power factor. The other points are the same as in the second example.

For the method of notifying of the NOMA multiplexing power factor, in the second example, the eNB notifies the UE of candidates of each layer {{0.1, 0.2}, {0.2, 0.3}} through the RRC signaling, and notifies of an index indicating a specific value through the DCI using 2 bits.

(Third example)

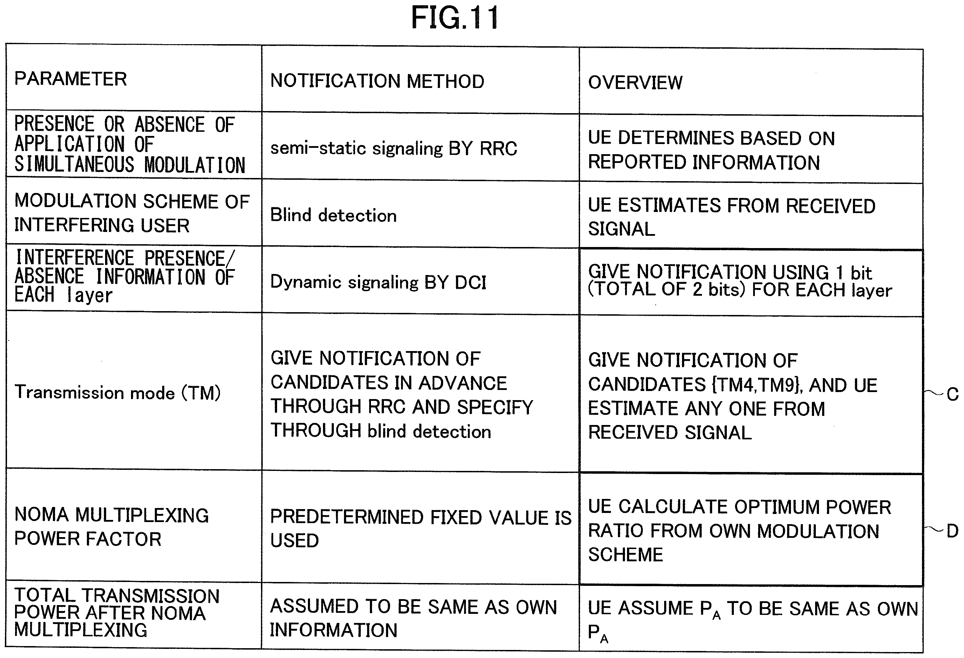

Next, the third example will be explained. Fig. 11 illustrates a summary of parameter notification methods according to the third example and operation examples of the UE side corresponding to the notification methods.

In the third example, the eNB gives a notification indicating whether or not the simultaneous modulation is applied through semi-static signaling using the RRC to the UE. Then, the UE determines whether or not the simultaneous modulation is applied based on the notified information.

The UE estimates the interference scheme of the interfering user from the received signal through the blind detection. As an estimation method, for example, there is a method in which reception is performed assuming possible modulation schemes, and a most probable modulation scheme is estimated to be a modulation scheme of the interfering user.

The eNB gives a notification of the interference presence/absence information of each layer to the UE through the dynamic signaling using the DCI. For example, the eNB gives a notification using 1 bit (a total of 2 bits) for each layer.

For the transmission mode (TM), the eNB gives a notification of candidates to the UE in advance through the RRC signaling, and the UE specifies the TM of the interfering user through the blind detection. For example, the eNB gives a notification of {TM 4, TM 9} to the UE as a candidate through the RRC signaling, and the UE estimates one of them from the received signal. As an estimation method, for example, there is a method in which reception is performed assuming each TM among the candidates, and a most probable TM is estimated to be a TM of an interference signal.

A predetermined fixed value is used for the NOMA multiplexing power factor. As an example, the UE calculates an optimal power ratio from its modulation scheme.

Further, the total transmission power after NOMA multiplexing is assumed to be the same as its own information. For example, the UE assumes that $P_A$ of the interfering UE is the same as its $P_A$ (not $P_A$ for NOMA, but $P_A$ individually notified to the UE). For the total transmission power after NOMA multiplexing, the UE performs the operations of the first and second examples when the notification using the RRC signaling described in the first and second examples is received and perform the operation of the third example when the notification is not received.

For matters indicated by C in Fig. 11, for example, the UE may perform the following operations.

In other words, when a notification of the TM candidates is not given from the eNB through the RRC signaling, the UE decodes the PDCCH on the assumption that no additional bits (2 bits) are included in the DCI. Further, in this case, the UE decodes the PDSCH on the premise that NOMA multiplexing is not performed.

When a notification of the TM candidates is given from the eNB through the RRC signaling, the UE decodes the PDCCH on the assumption that the present bits (2 bits) are added to the DCI. Then, the UE decodes the PDSCH on the assumption that the layer in which the bit is 1 is NOMA multiplexed. Further, the PDSCH is decoded under the assumption that the layer in which the bit is 0 is not NOMA multiplexed. The meanings of the bits 1 and 0 is an example. The meanings of 1 and 0 may be reversed.

For matters indicated by D in Fig. 11, as a specific example, the UE calculates an optimum power ratio (power factor) on the assumption that the QPSK signals are multiplexed according to its modulation scheme. Here, since the power ratio at which the signal points after the simultaneous modulation (for example, Fig. 3B) are arranged at equally intervals is unique, the UE calculates a power ratio at which the signal points after the simultaneous modulation are arranged as equal intervals as the optimum power ratio.

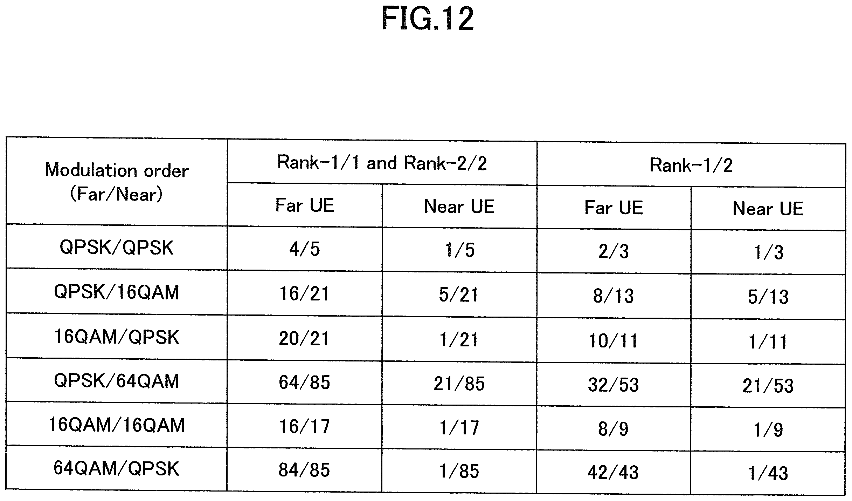

Further, as illustrated in Fig. 12, the optimum power ratio may be stored in the UE as a table for each layer combination of the far UE and the near UE, and the UE may acquire the power ratio by reading a value from the table. For example, when the power ratio signaled from the eNB to the UE is 0.5 or less, the UE can be determined to be the near UE, and when the power ratio is larger than 0.5, the UE can be determined to be the far UE.

In Fig. 12, Rank-1/1 indicates that the number of ranks is 1 for both the far UE and the near UE, and Rank-2/2 indicates that the number of rank is 2 for both the far UE and the near UE. Rank-1/2 indicates that the number of rank of the far UE is 1, and the number of rank of the near UE is 2. Further, the example of Fig. 12 illustrates an example in which the layers of the same UE have the same power ratio.

(Fourth example)

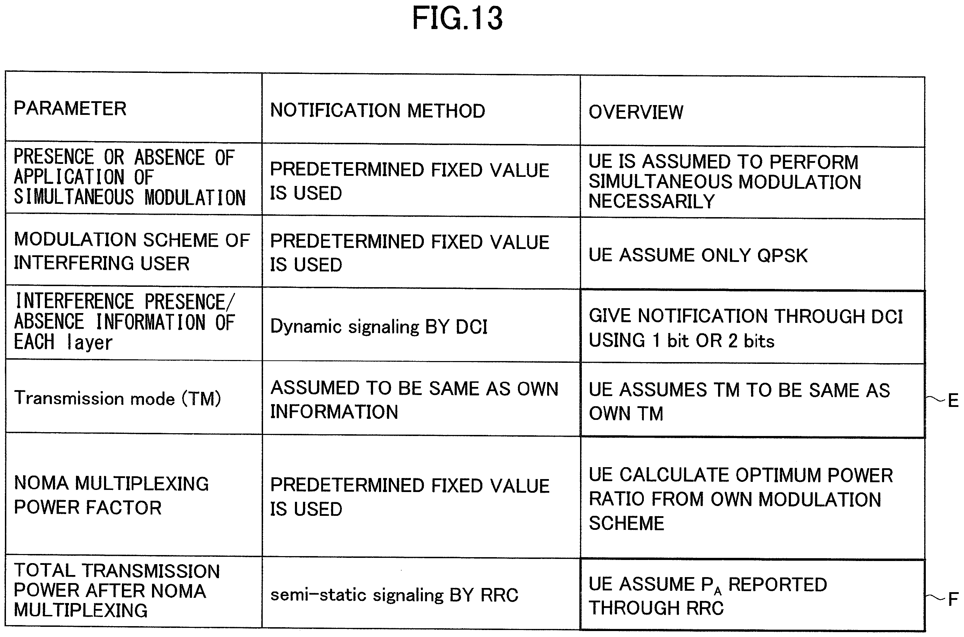

Next, the fourth example will be described. Fig. 13 illustrates a summary of parameter notification methods according to the fourth example and operation examples of the UE side corresponding to the notification methods.

The fourth example is the same as the first and second examples in the presence or absence of the application of the simultaneous modulation, the modulation scheme of the interfering user, and the transmission mode. The NOMA multiplexing power factor is the same as in the third example.

In the fourth example, for the interference presence/absence information of each layer, the eNB gives a notification to the UE through the dynamic signaling using the DCI. For example, the eNB gives a notification of the interference presence/absence information of each layer through 1 bit or 2 bits using DCI.

For the total transmission power after NOMA multiplexing, the eNB gives a notification to the UE through the RRC signaling. The UE uses $P_A$ which is reported for NOMA through the RRC signaling.

For matters indicated by E and F illustrated in Fig. 13, in more detail, for example, the UE performs operations to be described below.

In other words, when a notification of $P_A$ for NOMA is not given through the RRC signaling, the UE decodes the PDCCH on the assumption that there is no additional bit (1 bit or 2 bit) in the DCI. Then, the UE decodes the PDSCH on the assumption that the NOMA multiplexing is not performed.

Further, when a notification of $P_A$ for NOMA is given through the RRC signaling, the UE decodes the PDCCH assuming that 1 bit is added to DCI when its own TM is TM 2 or TM 3. This is an operation performed since it is unable to perform NOMA multiplexing in TM 2 and TM 3 when the number of layer differs for each of the UEs. In other words, when a notification of $P_A$ for NOMA is given through the RRC signaling, it can be estimated that NOMA multiplexing is performed, and in this case, the number of its own layer can be estimated to be the same as the number of layer of the interfering UE.

When the bit is 1, the UE decodes the PDSCH on the assumption that all layers are NOMA multiplexed. Further, when the bit is 0, the UE decodes the PDSCH on the assumption that all layers are not NOMA multiplexed.

When its own TM is neither TM 2 nor TM 3, the UE decodes the PDCCH under the assumption that 2 bits are added to the DCI (for each layer). In this case, the UE decodes the PDSCH on the assumption that the layer in which the bit is 1 is NOMA multiplexed. Further, the UE decodes the PDSCH on the assumption that the layer in which the bit is 0 is not NOMA multiplexed.

The meanings of the bits 1 and 0 is an example. The meanings of 1 and 0 may be reversed.

(Fifth example)

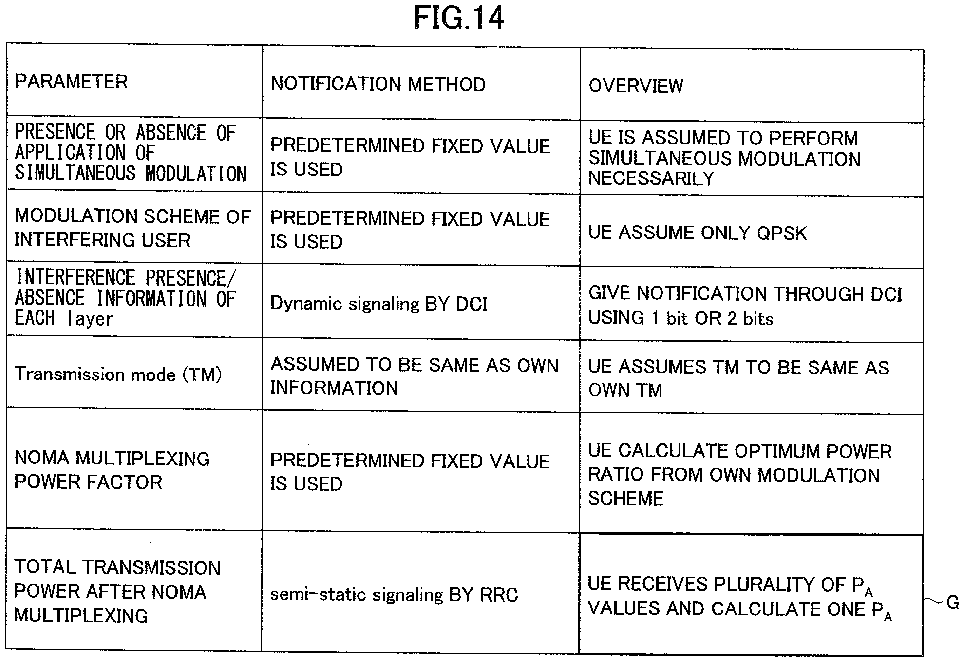

Next, the fifth example will be described. Fig. 14 illustrates a summary of parameter notification methods according to the fifth example and operation examples of the UE side corresponding to the notification methods. The fifth example is basically the same as the fourth example. The fifth example differs from the fourth example in an operation example of the UE side in the method of notifying of the total transmission power after NOMA multiplexing. The other points are the same as in the fourth example.

In the fifth example, for the method of notifying of the total transmission power after NOMA multiplexing, the UE receives a plurality of $P_A$ values from the eNB, calculates one $P_A$ value from a plurality of $P_A$ values, and uses the calculated $P_A$ value.

Specifically, for example, the UE calculates a certain $P_A$ value from a plurality of $P_A$ values of which the UE is notified (for example, $P_A$ for each NOMA user). As the calculation method, for example, there are averaging and weighted averaging, and the present invention is not limited thereto. For example, the calculation may be performed by addition, subtraction, or logarithmic averaging.

In the case of the averaging, for example, $P_A$ ($P_{A\_}$NOMA) to be used is calculated as in $P_{A\_}$NOMA = ($P_A$1 + $P_A$2)/2.

For the weighted averaging, for example, it is calculated as in $P_{A\_}$NOMA = (a × $P_A$1 + β × $P_A$2)/(α + β) is calculated. α and β are weights.

(Sixth example)

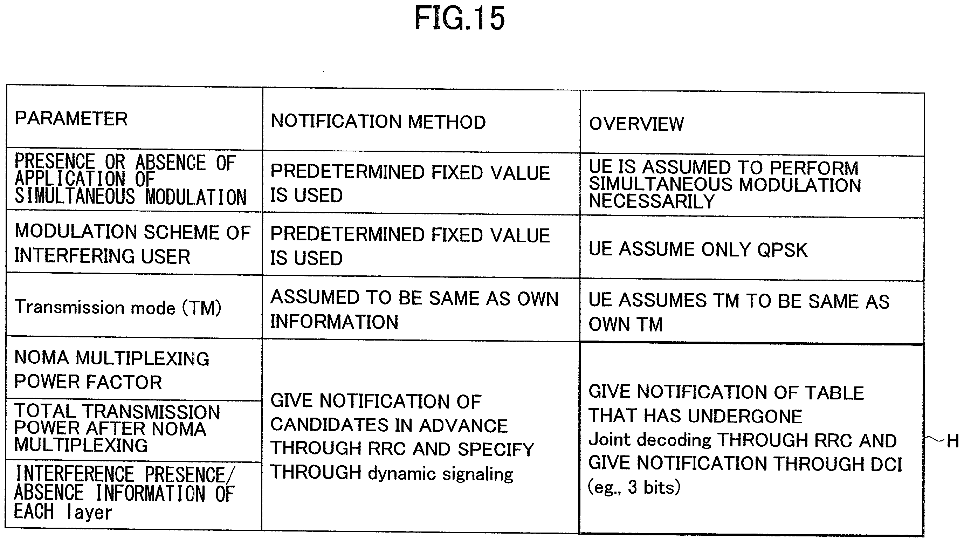

Next, the sixth example will be described. Fig. 15 illustrates a summary of parameter notification methods according to the fourth example and operation examples of the UE side corresponding to the notification methods. The sixth example is the same as the first and second examples in the presence or absence of the application of the simultaneous modulation, the modulation scheme of the interfering user, and the transmission mode.

In the sixth example, the eNB gives a notification of candidates in which the "NOMA multiplexing power factor, the total transmission power after NOMA multiplexing, and the interference presence/absence information for each layer" are collected to the UE in advance through the RRC signaling, and the UE specifies a combination of values to be used through the dynamic signaling.

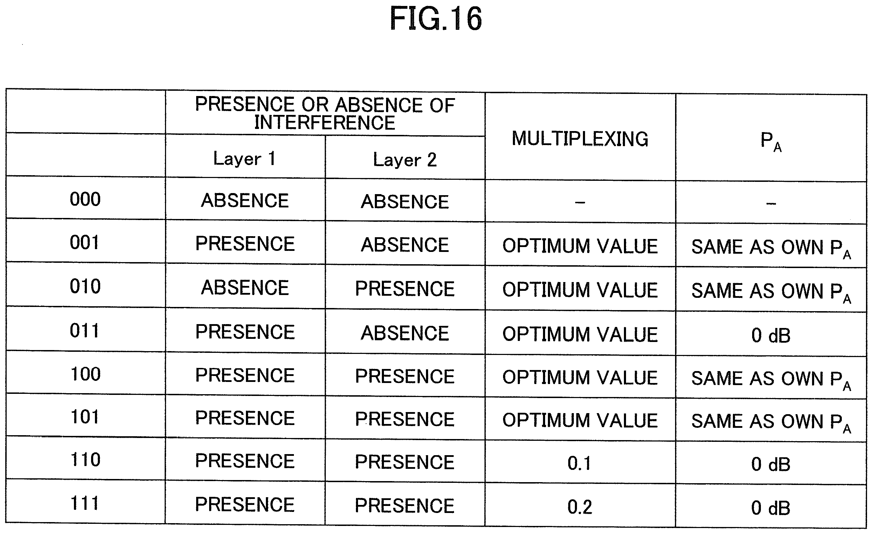

As a more specific example, the eNB gives a notification of a table that has undergone joint decoding to the UE through the RRC signaling. An example of this table is illustrated in Fig. 16. Then, the eNB gives a notification of information indicating a specific combination (3 bits in the example of Fig. 16) to the UE.

(Device configuration)

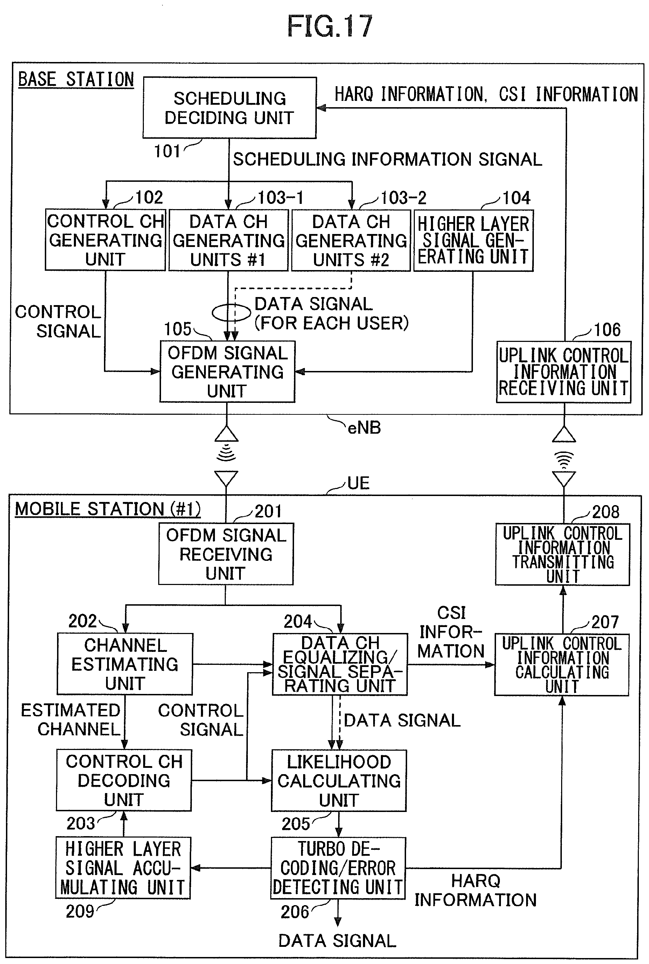

Fig. 17 illustrates exemplary configurations of the eNB and the UE according to the present embodiment. In the example of Fig. 17, it is assumed that there are user equipments (UE) #1 and #2 as a NOMA multiplexing pair, but only the user equipment #1 is illustrated.

<eNB>

As illustrated in Fig. 17, the eNB includes a scheduling deciding unit 101, a control channel (CH) generating unit 102, a data CH generating unit #1 (103-1), a data CH generating unit #2 (103-2), a higher layer signal generating unit 104, an OFDM signal generating unit 105, and an uplink control information receiving unit 106.

Based on HARQ information and CSI information which is fed back from the UE, the scheduling deciding unit 101 decides the presence/absence of NOMA multiplexing on each of frequency resources, the modulation scheme, the number of transmission layers of each UE, the multiplexing power factor, the total transmission power, the TM, and the presence/absence of simultaneous modulation.

The control CH generating unit 102 decides control the control CH information (DCI) based on the information decided by the scheduling deciding unit 101. The data CH generating units #1 and #2 (103-1 and 103-2) generate data signals of a UE #1 and a UE #2 based on the modulation scheme, the number of transmission layers, and the TM decided by the scheduling deciding unit 101.

The OFDM signal generating unit 105 combines the control CH, the data CH of each UE, and higher layer signal information (an RRC signal) to generate an OFDM signal (a time domain), and transmits the OFDM signal. When NOMA multiplexing is performed, the OFDM signal generating unit 105 combines the data CHs of the UEs in consideration of the multiplexing power factor, the total transmission power information, and the presence or absence of the simultaneous modulation. The uplink control information receiving unit 106 receives uplink control information (the HARQ information and the CSI information) from each UE.

<UE>

As illustrated in Fig. 17, the UE includes an OFDM signal receiving unit 201, a channel estimating unit 202, a control CH decoding unit 203, a data CH equalizing/signal separating unit 204, a likelihood calculating unit 205, a turbo decoding/error detecting unit 206, an uplink control information calculating unit 207, an uplink control information transmitting unit 208, and a higher layer signal accumulating unit 209.

The OFDM signal receiving unit 201 receives the OFDM signal (the time domain) and converts the OFDM signal into a frequency domain signal using FFT or the like. The channel estimating unit 202 estimates the channel from the received signal (the frequency domain). The control CH decoding unit 203 decodes the downlink control CH information (DCI) from the received signal and the channel estimation information. As described above in the above examples, the control CH decoding unit 203 determines the number of bits of the DCI according to the presence/absence of the higher layer signal of an interference information notification and decodes the DCI.

The data CH equalizing/signal separating unit 204 performs channel equalization/signal separation of the data CH from the received signal, the channel estimation information, and the control CH information. When NOMA multiplexing is performed, the reception process is performed in view of multiple users.

The likelihood calculating unit 205 calculates likelihood information (LLR) of the desired signal based on the above equalized/separated signals. When NOMA multiplexing is performed, the likelihood is calculated based on the optimum signal points according to the presence or absence of the simultaneous modulation or the like.

The turbo decoding/error detecting unit 206 performs turbo decoding, and performs error detection. The uplink control information calculating unit 207 calculates the downlink CSI information (a CQI, a PMI, and an RI) from the received signal. Further, the HARQ information (ACK/NACK) is calculated from a turbo detection result.

The uplink control information transmitting unit 208 transmits the above uplink control signal to the eNB. The higher layer signal accumulating unit 209 accumulates the higher layer signals (for example, the parameters reported through the RRC) and transfers the higher layer signals to the control CH decoding unit 203.

<Example of HW configuration>

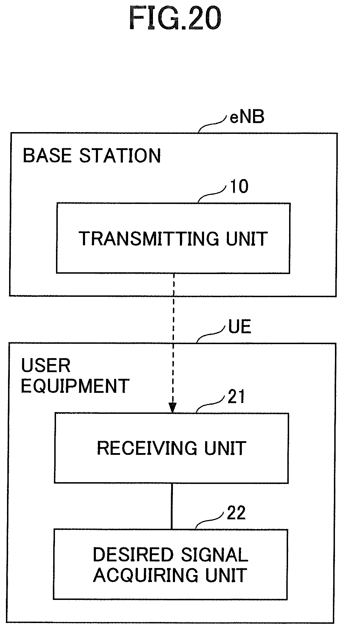

The entire configuration of the eNB illustrated in Fig. 17 (and Fig. 20 to be described later) may be implemented entirely by a hardware circuit (for example, one or more IC chips), or a part of the configuration of the eNB may be implemented by a hardware circuit, and the other parts may be implemented by a CPU and a program.

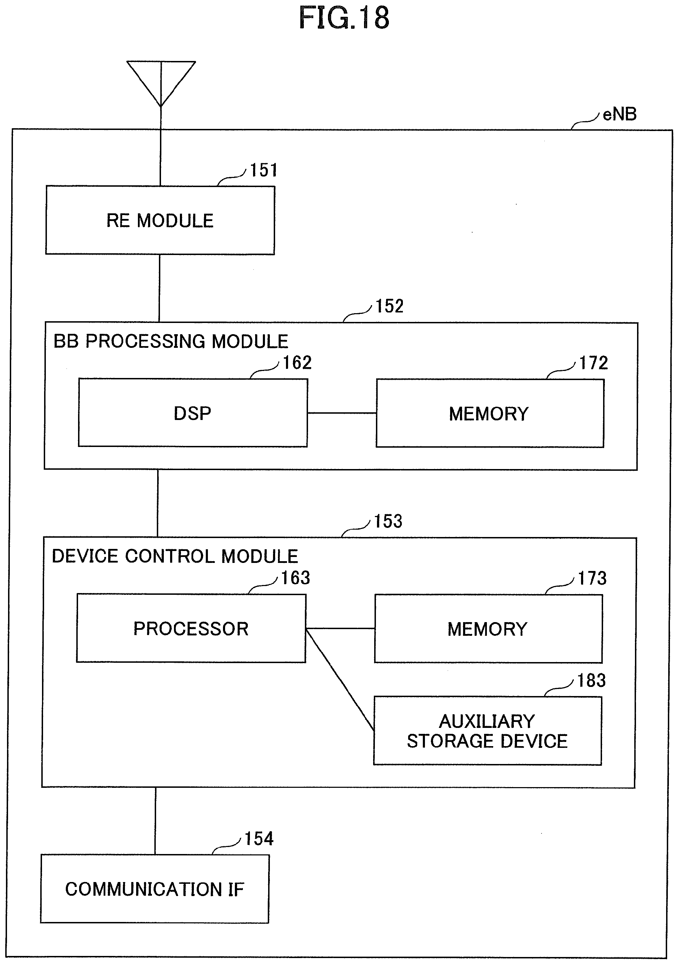

Fig. 18 is a diagram illustrating an example of a hardware (HW) configuration of the eNB. Fig. 18 illustrates a configuration that is closer to an implementation example than Fig. 17. As illustrated in Fig. 18, the UE includes a radio equipment (RE) module 151 that performs processing relating to radio signals, a baseband (BB) processing module 152 that performs baseband signal processing, a device control module 153 that performs processing of a higher layer or the like, and a communication IF154 which is an interface for a connection with a network.

The RE module 151 performs D/A conversion, modulation, frequency transform, power amplification, and the like on digital baseband signals received from the BB processing module 152 and generates radio signals to be transmitted from an antenna. Further, the RE module 151 performs frequency transform, A/D conversion, demodulation, and the like on radio signals received from the antenna, generates digital baseband signals, and transfers the digital baseband signals to the BB processing module 152. The RE module 151 includes, for example, the uplink control information receiving unit 106 and the OFDM signal generating unit 105 in Fig. 17.

The BB processing module 152 performs a process of converting an IP packet into a digital baseband signal and vice versa. A digital signal processor (DSP) 162 is a processor that performs signal processing in the BB processing module 152. A memory 172 is used as a work area of the DSP 152. The BB processing module 152 includes, for example, the scheduling deciding unit 101, the control CH (channel) generating unit 102, the data CH generating unit #1 (103-1), the data CH generating unit #2 (103-2), and the higher layer signal generating unit 104. All or some of the functions of the scheduling deciding unit 101, the control CH (channel) generating unit 102, the data CH generating unit #1 (103-1), the data CH generating unit #2 (103-2), and the higher layer signal generating unit 104 may be included in the device control module 153.

The device control module 153 performs protocol processing of the IP layer, OAM processing, and the like. A processor 163 is a processor that performs processing performed by the device control module 153. A memory 173 is used as a work area of the processor 163. An auxiliary storage device 183 is, for example, an HDD or the like, and stores various kinds of configuration information and the like used for an operation of the base station eNB.

The entire configuration of the UE illustrated in Fig. 17 (and Fig. 20 to be described later) may be implemented entirely by a hardware circuit (for example, one or more IC chips), or a part of the configuration of the UE may be implemented by a hardware circuit, and the other parts may be implemented by a CPU and a program.

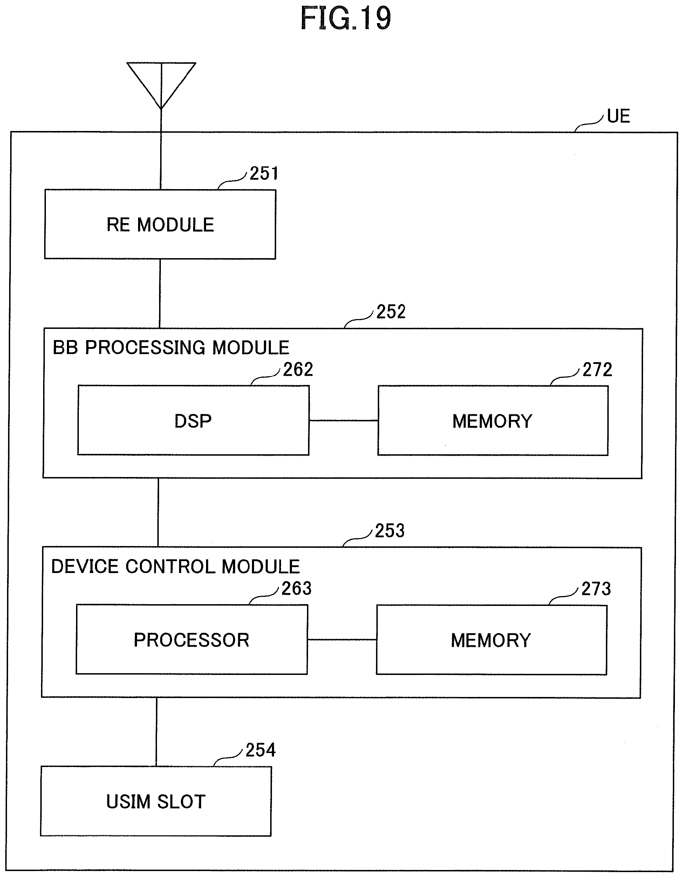

Fig. 19 is a diagram illustrating an example of a hardware (HW) configuration of the UE. Fig. 19 illustrates a configuration that is closer to an implementation example than Fig. 17. As illustrated in Fig. 19, the UE includes a RE module 251 that performs processing relating to radio signals, a BB processing module 252 that performs baseband signal processing, a device control module 253 that performs processing of a higher layer or the like, and a USIM slot 254 which is an interface for accessing a USIM card.

The RE module 251 performs digital-to-analog (D/A) conversion, modulation, frequency transform, power amplification, and the like on digital baseband signals received from the BB processing module 252 and generates radio signals to be transmitted from an antenna. Further, the RE module 251 performs frequency transform, analog to digital (A/D) conversion, demodulation, and the like on radio signals received from the antenna, generates digital baseband signals, and transfers the digital baseband signals to the BB processing module 252. The RE module 251 includes, for example, functions of the OFDM signal receiving unit 201 and the uplink control information transmitting unit 208 of Fig. 17.

The BB processing module 252 performs a process of converting an IP packet into a digital baseband signal and vice versa. A DSP 262 is a processor that performs signal processing in the BB processing module 252. A memory 272 is used as a work area of the DSP 262. The BB processing module 252 includes, for example, includes the channel estimating unit 202, the control CH decoding unit 203, the data CH equalizing/signal separating unit 204, the likelihood calculating unit 205, the turbo decoding/error detecting unit 206, the uplink control information calculating unit 207, and the higher layer signal accumulating unit 209. All or some of the functions of the channel estimating unit 202, the control CH decoding unit 203, the data CH equalizing/signal separating unit 204, the likelihood calculating unit 205, the turbo decoding/error detecting unit 206, the uplink control information calculating unit 207, and the higher layer signal accumulating unit 209 may be replaced by device It may be included in the control module 253.

The device control module 253 performs protocol processing of the IP layer, various application processing, and the like. A processor 263 is a processor that performs processing performed by the device control module 253. A memory 273 is used as a work area of the processor 263. Further, the processor 263 performs reading and writing of data with the USIM via the USIM slot 254.

The configurations (functional classifications) of the devices illustrated in Figs. 17 to 19 are merely examples of the configuration for implementing the process described in the present embodiment. An implementation method (a specific arrangement, names, and the like of the functional units) is not limited to a specific implementation method as long as the process described in the present embodiment can be performed.

For example, a configuration illustrated in Fig. 20 may be used. A radio communication system illustrated in Fig. 20 includes an eNB and a UE.

The eNB is a base station used in a radio communication system, including: a transmitting unit 10 that transmits some or all pieces of control information used for acquiring a desired signal from a multiplexed signal obtained by multiplexing signals of a plurality of users in a power region to a user equipment, wherein the transmitting unit transmits a plurality of candidates for some pieces of control information to the user equipment through semi-static signaling and transmits information designating a specific candidate among the plurality of candidates through dynamic signaling.

Through the above configuration, it is possible for the user equipment to appropriately acquire the control information used for obtaining the desired signal from the received signal in the radio communication system in which signals of a plurality of users are multiplexed in the power region and transmitted.

The UE is a user equipment used in a radio communication system, including: a receiving unit 21 that receives some or all pieces of control information used for acquiring a desired signal from a multiplexed signal obtained by multiplexing signals of a plurality of users in a power region from a base station; and a desired signal acquiring unit 22 that acquires the desired signal from the multiplexed signal using the control information, wherein when the receiving unit receives a part of pieces of control information from the base station, the desired signal acquiring unit uses a fixed value as information which is not received from the base station among the control information, or acquires the information which is not received from the base station among the control information through estimation.

Through the above configuration, it is possible for the user equipment to appropriately acquire the control information used for obtaining the desired signal from the received signal in the radio communication system in which signals of a plurality of users are multiplexed in the power region and transmitted.

The eNB is a base station used in a radio communication system, including: a transmitting unit 10 that transmits, to a user equipment, a part of pieces of control information used for acquiring a desired signal from a multiplexed signal obtained by multiplexing signals of a plurality of users in a power region, wherein when the transmitting unit transmits the part of pieces of control information to the base station, the user equipment uses information the same as information of the desired signal as information of interference signal which is not transmitted from the base station among the control information.

Through the above configuration, it is possible for the user equipment to appropriately acquire the control information used for obtaining the desired signal from the received signal in the radio communication system in which signals of a plurality of users are multiplexed in the power region and transmitted.

The UE is a user equipment used in a radio communication system, including: a receiving unit 21 that receives, from a base station, a part of pieces of control information used for acquiring a desired signal from a multiplexed signal obtained by multiplexing signals of a plurality of users in a power region; and a desired signal acquiring unit 22 that acquires the desired signal from the multiplexed signal using the control information, wherein when the receiving unit receives the part of pieces of control information from the base station, the desired signal acquiring unit uses information the same as information of the desired signal as information of interference signal which is not received from the base station among the control information

Through the above configuration, it is possible for the user equipment to appropriately acquire the control information used for obtaining the desired signal from the received signal in the radio communication system in which signals of a plurality of users are multiplexed in the power region and transmitted.

The receiving unit may receive a plurality of candidates for a part of pieces of control information from the base station through semi-static signaling and specify information designating a specific candidate among the plurality of candidates through dynamic signaling. Through this configuration, for example, it is possible to detect whether or not power region multiplexing has been previously performed through semi-static signaling, and it is possible to efficiently perform reception of information by dynamic signaling as necessary.

When the receiving unit does not receive a plurality of candidates for a part of pieces of control information through semi-static signaling, the desired signal acquiring unit may determine that the received signal received from the base station is not the multiplexed signal obtained by multiplexing the signals of the plurality of users in the power region and perform a process of acquiring the desired signal from the received signal. Through this configuration, it is possible to determine whether or not the received signal is a multiplexed signal and appropriately perform a desired signal acquisition process, and thus the reception quality is improved.

The control information may include multiplexed signal power information corresponding to transmission power of the multiplexed signal, and when the receiving unit does not receive the multiplexed signal power information, the desired signal acquiring unit may use power information corresponding to transmission power of the desired signal as the multiplexed signal power information. Through this configuration, even when the multiplexed signal power information is not received, it is possible to perform the process of acquiring the desired signal from the multiplexed signal.

The control information may include multiplexed signal power information corresponding to transmission power of the multiplexed signal, and the desired signal acquiring unit may calculate the multiplexed signal power information based on a plurality of pieces of power information received from the base station by the receiving unit. Through this configuration, even when the multiplexed signal power information is not received, it is possible to perform the process of acquiring the desired signal from the multiplexed signal.

The exemplary embodiments of the present invention have been described above, but the disclosed invention is not limited to the above embodiments, and those skilled in the art would understand that various modified examples, revised examples, alternative examples, substitution examples, and the like can be made. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be performed physically by a plurality of parts. For the sake of convenience of description, the base station eNB and the user equipment UE have been described using the functional block diagrams, but such devices may be implemented by hardware, software, or a combination thereof. Software executed by the processor included in the user equipment UE according to the embodiment of the present invention and software executed by the processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The specification discloses the following features.

(Item 1). A user equipment used in a radio communication system, including:

a receiving unit that receives a part of or all of pieces of control information used for acquiring a desired signal from a multiplexed signal obtained by multiplexing signals of a plurality of users in a power region from a base station; and

a desired signal acquiring unit that acquires the desired signal from the multiplexed signal using the control information,

wherein when the receiving unit receives a part of pieces of control information from the base station, the desired signal acquiring unit uses a fixed value as information which is not received from the base station among the control information, or acquires the information which is not received from the base station among the control information through estimation.

(Item 2). The user equipment according to item 1, wherein the receiving unit receives a plurality of candidates for the part of the pieces of control information from the base station through semi-static signaling, and specifies information designating a specific candidate among the plurality of candidates through dynamic signaling.

(Item 3). The user equipment according to item 1 or 2, wherein when the receiving unit does not receive a plurality of candidates for the part of pieces of control information through semi-static signaling, the desired signal acquiring unit determines that the received signal received from the base station is not the multiplexed signal obtained by multiplexing the signals of the plurality of users in the power region, and performs a process of acquiring the desired signal from the received signal.

(Item 4). The user equipment according to any one of items 1 to 3,

wherein the control information includes multiplexed signal power information corresponding to transmission power of the multiplexed signal, and when the receiving unit does not receive the multiplexed signal power information, the desired signal acquiring unit uses power information corresponding to transmission power of the desired signal as the multiplexed signal power information.

(Item 5). The user equipment according to any one of items 1 to 3,

wherein the control information includes multiplexed signal power information corresponding to transmission power of the multiplexed signal, and the desired signal acquiring unit calculates the multiplexed signal power information based on a plurality of pieces of power information received from the base station by the receiving unit.

(Item 6). A base station used in a radio communication system, including:

a transmitting unit that transmits a part of or all of pieces of control information used for acquiring a desired signal from a multiplexed signal obtained by multiplexing signals of a plurality of users in a power region to a user equipment,

wherein the transmitting unit transmits a plurality of candidates for the part of pieces of control information to the user equipment through semi-static signaling and transmits information designating a specific candidate among the plurality of candidates through dynamic signaling.

(Complement of Embodiment)

Notification of information is not limited to the aspects/embodiments described in this specification, but may be performed using other methods. For example, the notification of information may be performed physical layer signaling (such as downlink control information (DCI) or uplink control information (UCI)), upper layer signaling (such as radio resource control (RRC) signal, medium access control (MAC) signaling, or broadcast information (master information block (MIB) and system information block (SIB))), other signals, or combinations thereof. The RRC signaling may be referred to as an RRC message and may be, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which the systems are extended.

The processing sequences, the sequences, flowcharts and the like of the aspects/embodiments described above in this specification may be changed in the order as long as they are not incompatible with each other. For example, in the methods described in this specification, various steps as elements are described in an exemplary order and the methods are not limited to the described order.

Specific operations which are performed by the base station in this specification may be performed by an upper node thereof in some cases. In a network including one or more network nodes including a base station, various operations which are performed to communicate with a user equipment can be apparently performed by the base station and/or network nodes (for example, an MME or an S-GW can be considered but the network nodes are not limited thereto) other than the base station. A case in which the number of network nodes other than the base station is one has been described above, but a combination of plural different network nodes (for example, an MME and an S-GW) may be used.

The aspects described in this specification may be used alone, may be used in combination, or may be switched with implementation thereof.

The user equipment may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station may be referred to as an NodeB (NB), an enhanced NodeB (eNB), a base station, or some other appropriate terms by those skilled in the art.

The terms "determining (determining)" and "deciding (determining)" used in this specification may include various types of operations. For example, "determining" and "deciding" may include deeming that to perform judging, calculating, computing, processing, deriving, investigating, looking up (e.g., search in a table, a database, or another data structure), or ascertaining is to perform "determining" or "deciding". Furthermore, "determining" and "deciding" may include deeming that to perform receiving (e.g., reception of information), transmitting (e.g., transmission of information), input, output, or accessing (e.g., accessing data in memory) is to perform "determining" or "deciding". Furthermore, "determining" and "deciding" may include deeming that to perform resolving, selecting, choosing, establishing, or comparing is to perform "determining" or "deciding". Namely, "determining" and "deciding" may include deeming that some operation is to perform "determining" or "deciding".

An expression "on the basis of ~" which is used in this specification does not refer to only "on the basis of only ~," unless apparently described. In other words, the expression "on the basis of ~" refers to both "on the basis of only ~" and "on the basis of at least -."

So long as terms "include" and "including" and modifications thereof are used in this specification or the appended claims, the terms are intended to have a comprehensive meaning similar to a term "comprising." A term "or" which is used in this specification or the claims is intended not to mean an exclusive or.

In the entire disclosure, for example, when an article such as a, an, or the is added in translation into English, such an article refers to including the plural unless otherwise recognized from the context.

The present invention is not limited to the above embodiments, and various modifications, modifications, alternatives, substitutions, and the like are included in the present invention without departing from the spirit of the present invention.

The present patent application is based on and claims the priority of Japanese Patent Application No. 2016-078501 filed to April 8, 2016. The entire contents of Japanese Patent Application No. 2016-078501 are incorporated herein.

EXPLANATIONS OF LETTERS OR NUMERALS

| | |
|---|---|
| eNB | base station |
| 101 | scheduling deciding unit |
| 102 | control CH generating unit |
| 103 | data CH generating units #1 and #2 |
| 104 | higher layer signal generating unit |
| 105 | OFDM signal generating unit |
| 106 | uplink control information receiving unit |
| 151 | RE module |
| 152 | BB processing module |
| 153 | device control module |
| 154 | communication IF |
| UE | user equipment |
| 201 | OFDM signal receiving unit |
| 202 | channel estimating unit |
| 203 | control CH decoding unit |
| 204 | data CH equalizing/signal separating unit |
| 205 | likelihood calculating unit |
| 206 | turbo decoding/error detecting unit |
| 207 | uplink control information calculating unit |
| 208 | uplink control information transmitting unit |
| 209 | higher layer signal accumulating unit |
| 251 | radio equipment (RE) module |
| 252 | baseband (BB) processing module |
| 253 | device control module |
| 254 | USIM slot |

**Claims**

1. A user equipment used in a radio communication system, comprising:

    a receiving unit that receives, from a base station, a part of pieces of control information used for acquiring a desired signal from a multiplexed signal obtained by multiplexing signals of a plurality of users in a power region; and

a desired signal acquiring unit that acquires the desired signal from the multiplexed signal using the control information,

wherein when the receiving unit receives the part of pieces of control information from the base station, the desired signal acquiring unit uses information the same as information of the desired signal as information of interference signal which is not received from the base station among the control information.

2. The user equipment according to claim 1,
wherein the receiving unit receives a plurality of candidates for the part of pieces of control information from the base station through semi-static signaling, and specifies information designating a specific candidate among the plurality of candidates through dynamic signaling.

3. The user equipment according to claim 1 or 2,
wherein when the receiving unit does not receive a plurality of candidates for the part of pieces of control information through semi-static signaling, the desired signal acquiring unit determines that the received signal received from the base station is not the multiplexed signal obtained by multiplexing the signals of the plurality of users in the power region, and performs a process of acquiring the desired signal from the received signal.

4. The user equipment according to claim 1,
wherein the receiving unit receives, by RRC signaling, multiplexed signal power information corresponding to transmission power of the multiplexed signal as other part of pieces of the control information.

5. The user equipment according to any one of claims 1 to 3,
wherein the control information includes multiplexed signal power information corresponding to transmission power of the multiplexed signal, and the desired signal acquiring unit calculates the multiplexed signal power information based on a plurality of pieces of power information received from the base station by the receiving unit.

6. A base station used in a radio communication system, comprising:

a transmitting unit that transmits, to a user equipment, a part of pieces of control information used for acquiring a desired signal from a multiplexed signal obtained by multiplexing signals of a plurality of users in a power region, wherein when the transmitting unit transmits the part of pieces of control information to the base station, the user equipment uses information the same as information of the desired signal as information of interference signal which is not transmitted from the base station among the control information.

# FIG.1

eNB

UE2

UE1

# FIG.2A

EP 3 442 144 A1

TRANSMISSION SIDE

UE2

+

UE1

TRANSMISSION
POWER

FREQUENCY

# FIG.2B

RECEPTION SIDE UE 2

RECEPTION
POWER

→FREQUENCY

—

SIGNAL OF UE 1

⇨

RECEPTION
POWER

→FREQUENCY

DECODED SIGNAL OF UE 2

EP 3 442 144 A1

# FIG.2C

RECEPTION SIDE UE 1

RECEPTION
POWER

FREQUENCY

# FIG.3A

## SIGNAL POINTS AFTER NOMA MULTIPLEXING
### (NON-Gray mapping)

Q

1010　1000　│　0010　0000
　•　　•　　│　•　　$P_0$•
Bits for cell center UE
　•　　•　⌒│　$P_1$　•
1011　1001　│　0011　0001

──────────────┼──────────→ I

　1110　1100　│　0110　0100
　⌣•　　•　│　•　　•
Bits for cell edge UE
　•　　•　│　•　　•
1111　1101　│　0111　0101

# FIG.3B

## SIGNAL POINTS AFTER SIMULTANEOUS
## MODULATION IS APPLIED (Gray mapping)

Q

1011　1001　│　0001　0011
　•　　•　│　•　　•

　•　　•　│　•　　•
1010　1000　│　0000　0010

──────────────┼──────────→ I

1110　1100　│　0100　0110
　•　　•　│　•　　•

　•　　•　│　•　　•
1111　1101　│　0101　0111

# FIG.4

PDCCH

Cell Specific Reference Signal

$P_A$

$P_B$

PDSCH: in the symbol with no reference signal

PDSCH: in the same symbol as reference signal

EP 3 442 144 A1

# FIG.5

EP 3 442 144 A1

(a) <u>TRANSMISSION POWER WHEN OMA IS APPLIED</u>

(b) <u>TRANSMISSION POWER WHEN NOMA IS APPLIED</u>

<u>EXAMPLE IN WHICH $P_A$ OF near UE IS USED</u>

<u>EXAMPLE IN WHICH $P_A$ OF far UE IS USED</u>

# FIG.6

# FIG.7

FIG.8

RECEIVED SIGNAL (FREQUENCY REGION)

CHANNEL ESTIMATION — S201

PDCCH DEMODULATION — S202

S203 — IS IT NOMA MULTIPLEXED?
- NO
- YES

• PRESENCE OR ABSENCE OF INTERFERENCE OF EACH Layer
• MODULATION SCHEME OF INTERFERENCE SIGNAL
• PRESENCE OR ABSENCE OF INTERFERENCE OF EACH Layer
• TM OF INTERFERENCE

S204 — CHANNEL EQUALIZATION/ SPATIAL SEPARATION (SINGLE USER)

S206 — CHANNEL EQUALIZATION/ SPATIAL SEPARATION (MULTIPLE USERS)

S205 — LIKELIHOOD CALCULATION (NORMAL SIGNAL POINTS)

S207 — IS SIMULTANEOUS MODULATION PERFORMED?
- YES
- NO

• PRESENCE OR ABSENCE OF SIMULTANEOUS MODULATION

S209 — LIKELIHOOD CALCULATION (SIMULTANEOUS SIGNAL POINTS OF NON-Gray mapping)

S208 — LIKELIHOOD CALCULATION (SIMULTANEOUS SIGNAL POINTS OF Gray mapping)

S210 — TURBO DECODING PROCESS

• MULTIPLEXING POWER RATIO
• TOTAL TRANSMISSION POWER

S211 — ERROR DETECTION (CRC)

RECEIVED DATA SEQUENCE

EP 3 442 144 A1

# FIG.9

| PARAMETER | NOTIFICATION METHOD | OVERVIEW |
|---|---|---|
| PRESENCE OR ABSENCE OF APPLICATION OF SIMULTANEOUS MODULATION | PREDETERMINED FIXED VALUE IS USED | UE IS ASSUMED TO PERFORM SIMULTANEOUS MODULATION NECESSARILY |
| MODULATION SCHEME OF INTERFERING USER | PREDETERMINED FIXED VALUE IS USED | UE ASSUME ONLY QPSK |
| INTERFERENCE PRESENCE/ ABSENCE INFORMATION OF EACH layer | Blind detection | UE ESTIMATES FROM RECEIVED SIGNAL |
| Transmission mode (TM) | ASSUMED TO BE SAME AS OWN INFORMATION | UE ASSUME TM IS SAME AS OWN TM |
| NOMA MULTIPLEXING POWER FACTOR | GIVE NOTIFICATION OF CANDIDATES IN ADVANCE THROUGH RRC AND SPECIFY THROUGH dynamic signaling | GIVE NOTIFICATION OF CANDIDATES {0.1, 0.2, 0.3, 0.4} THROUGH RRC AND GIVES NOTIFICATION OF index THROUGH DCI (2 bits) |
| TOTAL TRANSMISSION POWER AFTER NOMA MULTIPLEXING | GIVE NOTIFICATION OF CANDIDATES IN ADVANCE THROUGH RRC AND SPECIFY THROUGH dynamic signaling | GIVE NOTIFICATION OF CANDIDATES {-3 dB, 0 dB} THROUGH RRC AND GIVES NOTIFICATION OF index THROUGH DCI (1 bit) |

~A

EP 3 442 144 A1

# FIG.10

| PARAMETER | NOTIFICATION METHOD | OVERVIEW | |
|---|---|---|---|
| PRESENCE OR ABSENCE OF APPLICATION OF SIMULTANEOUS MODULATION | PREDETERMINED FIXED VALUE IS USED | UE IS ASSUMED TO PERFORM SIMULTANEOUS MODULATION NECESSARILY | |
| MODULATION SCHEME OF INTERFERING USER | PREDETERMINED FIXED VALUE IS USED | UE ASSUME ONLY QPSK | |
| INTERFERENCE PRESENCE/ ABSENCE INFORMATION OF EACH layer | Blind detection | UE ESTIMATES FROM RECEIVED SIGNAL | |
| Transmission mode (TM) | ASSUMED TO BE SAME AS OWN INFORMATION | UE ASSUME TM IS SAME AS OWN TM | |
| NOMA MULTIPLEXING POWER FACTOR | GIVE NOTIFICATION OF CANDIDATES IN ADVANCE THROUGH RRC AND SPECIFY THROUGH dynamic signaling | GIVE NOTIFICATION OF CANDIDATES {0.1, 0.2} AND {0.3, 0.4} THROUGH RRC AND GIVES NOTIFICATION OF index THROUGH DCI (2 bits) | ~B |
| TOTAL TRANSMISSION POWER AFTER NOMA MULTIPLEXING | GIVE NOTIFICATION OF CANDIDATES IN ADVANCE THROUGH RRC AND SPECIFY THROUGH dynamic signaling | GIVE NOTIFICATION OF CANDIDATES {-3 dB, 0 dB} THROUGH RRC AND GIVES NOTIFICATION OF index THROUGH DCI (1 bit) | |

EP 3 442 144 A1

# FIG.11

| PARAMETER | NOTIFICATION METHOD | OVERVIEW | |
|---|---|---|---|
| PRESENCE OR ABSENCE OF APPLICATION OF SIMULTANEOUS MODULATION | semi-static signaling BY RRC | UE DETERMINES BASED ON REPORTED INFORMATION | |
| MODULATION SCHEME OF INTERFERING USER | Blind detection | UE ESTIMATES FROM RECEIVED SIGNAL | |
| INTERFERENCE PRESENCE/ ABSENCE INFORMATION OF EACH layer | Dynamic signaling BY DCI | GIVE NOTIFICATION USING 1 bit (TOTAL OF 2 bits) FOR EACH layer | |
| Transmission mode (TM) | GIVE NOTIFICATION OF CANDIDATES IN ADVANCE THROUGH RRC AND SPECIFY THROUGH blind detection | GIVE NOTIFICATION OF CANDIDATES {TM4,TM9}, AND UE ESTIMATE ANY ONE FROM RECEIVED SIGNAL | ～C |
| NOMA MULTIPLEXING POWER FACTOR | PREDETERMINED FIXED VALUE IS USED | UE CALCULATE OPTIMUM POWER RATIO FROM OWN MODULATION SCHEME | ～D |
| TOTAL TRANSMISSION POWER AFTER NOMA MULTIPLEXING | ASSUMED TO BE SAME AS OWN INFORMATION | UE ASSUME $P_A$ TO BE SAME AS OWN $P_A$ | |

EP 3 442 144 A1

# FIG.12

| Modulation order (Far/Near) | Rank-1/1 and Rank-2/2 | | Rank-1/2 | |
|---|---|---|---|---|
| | Far UE | Near UE | Far UE | Near UE |
| QPSK/QPSK | 4/5 | 1/5 | 2/3 | 1/3 |
| QPSK/16QAM | 16/21 | 5/21 | 8/13 | 5/13 |
| 16QAM/QPSK | 20/21 | 1/21 | 10/11 | 1/11 |
| QPSK/64QAM | 64/85 | 21/85 | 32/53 | 21/53 |
| 16QAM/16QAM | 16/17 | 1/17 | 8/9 | 1/9 |
| 64QAM/QPSK | 84/85 | 1/85 | 42/43 | 1/43 |

# FIG.13

| PARAMETER | NOTIFICATION METHOD | OVERVIEW | |
|---|---|---|---|
| PRESENCE OR ABSENCE OF APPLICATION OF SIMULTANEOUS MODULATION | PREDETERMINED FIXED VALUE IS USED | UE IS ASSUMED TO PERFORM SIMULTANEOUS MODULATION NECESSARILY | |
| MODULATION SCHEME OF INTERFERING USER | PREDETERMINED FIXED VALUE IS USED | UE ASSUME ONLY QPSK | |
| INTERFERENCE PRESENCE/ ABSENCE INFORMATION OF EACH layer | Dynamic signaling BY DCI | GIVE NOTIFICATION THROUGH DCI USING 1 bit OR 2 bits | |
| Transmission mode (TM) | ASSUMED TO BE SAME AS OWN INFORMATION | UE ASSUMES TM TO BE SAME AS OWN TM | ~E |
| NOMA MULTIPLEXING POWER FACTOR | PREDETERMINED FIXED VALUE IS USED | UE CALCULATE OPTIMUM POWER RATIO FROM OWN MODULATION SCHEME | |
| TOTAL TRANSMISSION POWER AFTER NOMA MULTIPLEXING | semi-static signaling BY RRC | UE ASSUME $P_A$ REPORTED THROUGH RRC | ~F |

EP 3 442 144 A1

# FIG.14

| PARAMETER | NOTIFICATION METHOD | OVERVIEW |
|---|---|---|
| PRESENCE OR ABSENCE OF APPLICATION OF SIMULTANEOUS MODULATION | PREDETERMINED FIXED VALUE IS USED | UE IS ASSUMED TO PERFORM SIMULTANEOUS MODULATION NECESSARILY |
| MODULATION SCHEME OF INTERFERING USER | PREDETERMINED FIXED VALUE IS USED | UE ASSUME ONLY QPSK |
| INTERFERENCE PRESENCE/ ABSENCE INFORMATION OF EACH layer | Dynamic signaling BY DCI | GIVE NOTIFICATION THROUGH DCI USING 1 bit OR 2 bits |
| Transmission mode (TM) | ASSUMED TO BE SAME AS OWN INFORMATION | UE ASSUMES TM TO BE SAME AS OWN TM |
| NOMA MULTIPLEXING POWER FACTOR | PREDETERMINED FIXED VALUE IS USED | UE CALCULATE OPTIMUM POWER RATIO FROM OWN MODULATION SCHEME |
| TOTAL TRANSMISSION POWER AFTER NOMA MULTIPLEXING | semi-static signaling BY RRC | UE RECEIVES PLURALITY OF $P_A$ VALUES AND CALCULATE ONE $P_A$ |

~G

EP 3 442 144 A1

# FIG.15

| PARAMETER | NOTIFICATION METHOD | OVERVIEW |
|---|---|---|
| PRESENCE OR ABSENCE OF APPLICATION OF SIMULTANEOUS MODULATION | PREDETERMINED FIXED VALUE IS USED | UE IS ASSUMED TO PERFORM SIMULTANEOUS MODULATION NECESSARILY |
| MODULATION SCHEME OF INTERFERING USER | PREDETERMINED FIXED VALUE IS USED | UE ASSUME ONLY QPSK |
| Transmission mode (TM) | ASSUMED TO BE SAME AS OWN INFORMATION | UE ASSUMES TM TO BE SAME AS OWN TM |
| NOMA MULTIPLEXING POWER FACTOR | GIVE NOTIFICATION OF CANDIDATES IN ADVANCE THROUGH RRC AND SPECIFY THROUGH dynamic signaling | GIVE NOTIFICATION OF TABLE THAT HAS UNDERGONE Joint decoding THROUGH RRC AND GIVE NOTIFICATION THROUGH DCI (eg., 3 bits) |
| TOTAL TRANSMISSION POWER AFTER NOMA MULTIPLEXING | | |
| INTERFERENCE PRESENCE/ ABSENCE INFORMATION OF EACH layer | | |

~H

EP 3 442 144 A1

# FIG.16

| | PRESENCE OR ABSENCE OF INTERFERENCE | | MULTIPLEXING | $P_A$ |
|---|---|---|---|---|
| | Layer 1 | Layer 2 | | |
| 000 | ABSENCE | ABSENCE | – | – |
| 001 | PRESENCE | ABSENCE | OPTIMUM VALUE | SAME AS OWN $P_A$ |
| 010 | ABSENCE | PRESENCE | OPTIMUM VALUE | SAME AS OWN $P_A$ |
| 011 | PRESENCE | ABSENCE | OPTIMUM VALUE | 0 dB |
| 100 | PRESENCE | PRESENCE | OPTIMUM VALUE | SAME AS OWN $P_A$ |
| 101 | PRESENCE | PRESENCE | OPTIMUM VALUE | SAME AS OWN $P_A$ |
| 110 | PRESENCE | PRESENCE | 0.1 | 0 dB |
| 111 | PRESENCE | PRESENCE | 0.2 | 0 dB |

EP 3 442 144 A1

# FIG.17

BASE STATION

SCHEDULING DECIDING UNIT
101

HARQ INFORMATION, CSI INFORMATION

SCHEDULING INFORMATION SIGNAL

102
CONTROL CH GENERATING UNIT

103-1
DATA CH GENERATING UNITS #1

103-2
DATA CH GENERATING UNITS #2

104
HIGHER LAYER SIGNAL GENERATING UNIT

CONTROL SIGNAL

DATA SIGNAL (FOR EACH USER)

105
OFDM SIGNAL GENERATING UNIT

106
UPLINK CONTROL INFORMATION RECEIVING UNIT

eNB

UE

MOBILE STATION (#1)

201
OFDM SIGNAL RECEIVING UNIT

208
UPLINK CONTROL INFORMATION TRANSMITTING UNIT

202
CHANNEL ESTIMATING UNIT

204
DATA CH EQUALIZING/ SIGNAL SEPARATING UNIT

CSI INFORMATION

207
UPLINK CONTROL INFORMATION CALCULATING UNIT

ESTIMATED CHANNEL

CONTROL SIGNAL

DATA SIGNAL

CONTROL CH DECODING UNIT
203

LIKELIHOOD CALCULATING UNIT
205

HIGHER LAYER SIGNAL ACCUMULATING UNIT
209

TURBO DECODING/ERROR DETECTING UNIT
206

HARQ INFORMATION

DATA SIGNAL

# FIG.18

Block diagram of eNB with RE MODULE (151) connected to antenna, BB PROCESSING MODULE (152) containing DSP (162) and MEMORY (172), DEVICE CONTROL MODULE (153) containing PROCESSOR (163), MEMORY (173), and AUXILIARY STORAGE DEVICE (183), and COMMUNICATION IF (154).

# FIG.19

# FIG.20

eNB

BASE STATION

10

TRANSMITTING UNIT

UE

USER
EQUIPMENT

21

RECEIVING UNIT

22

DESIRED SIGNAL
ACQUIRING UNIT

## INTERNATIONAL SEARCH REPORT

| International application No. |
|---|
| PCT/JP2017/014230 |

**A. CLASSIFICATION OF SUBJECT MATTER**
*H04J99/00*(2009.01)i, *H04W72/04*(2009.01)i

According to International Patent Classification (IPC) or to both national classification and IPC

**B. FIELDS SEARCHED**

Minimum documentation searched (classification system followed by classification symbols)
H04J99/00, H04W72/04

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2015/167714 A1  (INTEL IP CORP.),<br>05 November 2015 (05.11.2015),<br>page 4, line 23 to page 12, line 27; page 18,<br>line 3 to page 19, line 2<br>& US 2015/0312074 A1 | 1,2,4-6<br>3 |
| A | JP 2014-155092 A  (NTT Docomo Inc.),<br>25 August 2014 (25.08.2014),<br>& US 2016/0014785 A1    & WO 2014/125892 A1<br>& EP 2958389 A1 | 1-6 |
| A | WO 2015/107818 A1  (NTT Docomo Inc.),<br>23 July 2015 (23.07.2015),<br>& JP 2015-136031 A       & US 2016/0330695 A1 | 1-6 |

☒  Further documents are listed in the continuation of Box C.        ☐  See patent family annex.

| | |
|---|---|
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 19 June 2017 (19.06.17) | 27 June 2017 (27.06.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2017/014230

C (Continuation).　　DOCUMENTS CONSIDERED TO BE RELEVANT

| Category* | Citation of document, with indication, where appropriate, of the relevant passages | Relevant to claim No. |
|---|---|---|
| A | Ericsson, MuST Performance Results Summary [online], 3GPP TSG-RAN WG1#82b　R1-156084, 2015.10.09, pp.1-9 | 1-6 |

Form PCT/ISA/210 (continuation of second sheet) (January 2015)

## REFERENCES CITED IN THE DESCRIPTION

**Patent documents cited in the description**

- JP 2016078501 A

**Non-patent literature cited in the description**

- *3GPP TR 36.859 V 13.0.0,* December 2015
- *3GPP TS 36.213 V 13.1.1,* March 2016